# EUROPEAN PATENT SPECIFICATION

(11) **EP 3 896 563 B1**
(45) Date of publication and mention of the grant of the patent: **22.01.2025**
(21) Application number: 19904613.7
(22) Date of filing: 05.11.2019
(51) Int. Cl.: G06F 3/0488, H01Q 1/24, H04M 1/02, H04M 1/72454

(54) **TOUCH POSITION ADJUSTMENT METHOD AND DEVICE, STORAGE MEDIUM, AND ELECTRONIC DEVICE**
VERFAHREN UND VORRICHTUNG ZUR EINSTELLUNG DER BERÜHRUNGSPOSITION, SPEICHERMEDIUM UND ELEKTRONISCHE VORRICHTUNG
PROCÉDÉ ET DISPOSITIF D'AJUSTEMENT DE POSITION TACTILE, SUPPORT DE STOCKAGE ET DISPOSITIF ÉLECTRONIQUE

(30) Priority: 29.12.2018 CN 201811643738
(43) Date of publication of application: 20.10.2021
(73) Proprietor: ZTE Corporation, Shenzhen Guangdong 518057 (CN)
(72) Inventor: SHEN, Shaowu, Shenzhen, Guangdong 518057 (CN); LIU, Liting, Shenzhen, Guangdong 518057 (CN)
(74) Representative: Swindell & Pearson Limited
(86) International application number: PCT/CN2019/115499
(87) International publication number: WO 2020/134582

(56) References cited:
- WO-A1-2015/019894
- WO-A1-2016/131236
- CN-A- 104 683 540
- CN-A- 105 100 374
- CN-A- 105 959 464
- CN-A- 106 452 550
- CN-A- 106 911 848
- CN-A- 108 848 269
- CN-A- 108 989 578
- US-A1- 2018 358 991

## Description

### TECHNICAL FIELD

The present invention relates to the field of communication, and more particularly, to a touch position adjustment method and apparatus, a storage medium and an electronic device therefor.

### BACKGROUND

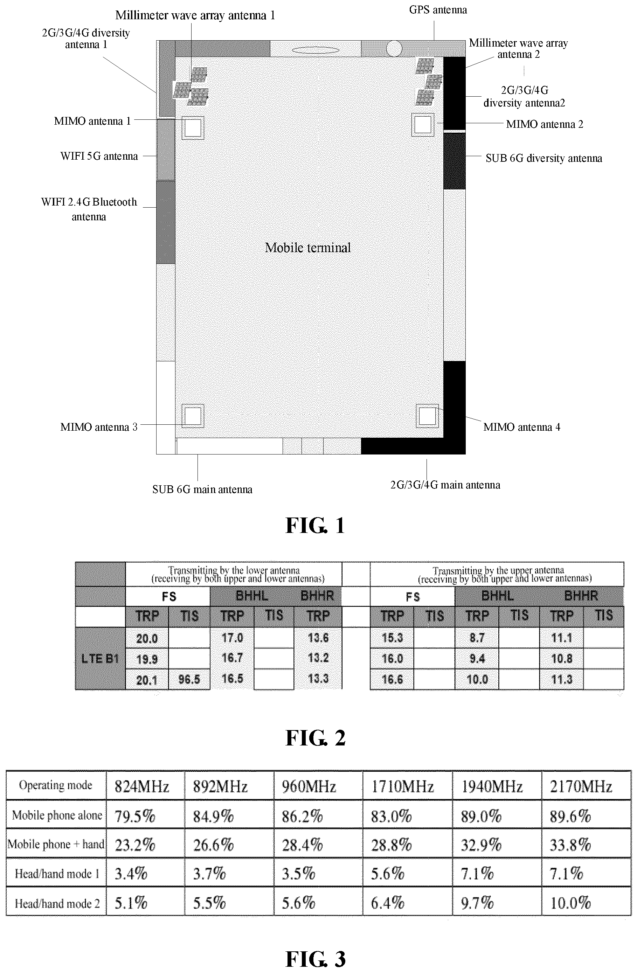

With the continuous evolution of communicable terminal devices in function and performance, there are more and more systems and frequency bands. By taking mobile terminals as an example, the same mobile terminal should be compatible with most functions of cellular, wireless fidelity (WIFI), Bluetooth, near field communication (NFC), global positioning system (GPS) and digital TV (DTV), and should cover 2G/3G/4G in frequency band. There will be a demand for ultrahigh frequency and millimeter waves of 5G in the future, ranging from 600 M to 60 GHZ in frequency band. To pursue a higher data transmission rate, the multiple input multiple output (MIMO) multi-antenna technology is also required. As shown in FIG. 1, the edge of the mobile terminal will cover more than 10 antennas in all sizes. In a handheld state (or in a case where the mobile terminal is touched by other touch objects), the performances of some antennas are often greatly reduced. How to balance the efficiency of multiple antennas in the handheld state to improve the call completion rate, call drop rate and data service in the handheld state is a problem to be urgently solved at present. Thus, in the related technology, there is a problem that the wireless performance of the terminal device will be reduced when the terminal device is touched by a touch object.

US2018358991A1 discloses a high-frequency antenna, such as may be implemented in a mobile computing device, is sensitive to obstructions that interfere with, and attenuate, a signal emanating therefrom. In fact, in mobile communication devices, such as cellular telephones, a user's hand, or even clothing, can attenuate the signal to cause a noticeable degradation in the quality of service of the device. To alleviate this, a mobile computing device is configured to detect the attenuation and provide a notification to a user to alleviate the situation. In some cases, the user is prompted to hold the mobile computing device in a different orientation in order to remove the obstruction. The prompting may be provided through visual, audio, haptic, or other types of feedback, including dispersing heat generated by the mobile computing device near the antenna location so it become uncomfortable for the user to hold the device in a way that interferes with the antenna system.

CN106911848A discloses a method for outputting a prompt message and a terminal device. The invention comprises the steps of monitoring whether the terminal device is switched from a vertical screen mode to a horizontal screen mode or not; if the terminal device is switched from the vertical screen mode to the horizontal screen mode, determining whether the terminal device is connected with a wireless fidelity WiFi network or not; and if terminal device is connected with the WiFi network, outputting a first prompt message to prompt a user to avoid holding a position of a WiFi antenna of the terminal device. Through application of the embodiment of the invention, the problem that the signal strength of the WiFi antenna is reduced due to the fact that the user holds the position of the WiFi antenna of the terminal device can be avoided.

CN108848269A provides a mobile terminal, and a control method of a positioning module in the mobile terminal. The problem that the strength of a received satellite signal is weakened due to the change of a placement posture of the mobile terminal in the prior art is solved. The mobile terminal comprises a positioning module, wherein the positioning module comprises at least two antennas, and the at least two antennas receive satellite signals of the same frequency; a sensor for detecting gravity acceleration components of the mobile terminal on three coordinate directions of a three-dimensional coordinate system; and a controller for determining a current holding state of the mobile terminal according to the gravity acceleration components, matching the current holding state with a pre-stored holding state-antenna corresponding relationship table to determine a corresponding antenna, and triggering the corresponding antenna to connect with a rear end link, wherein the corresponding relationship between the antenna having high signal strength in at least two antennas in the same holding state and the holding state is stored in the holding state-antenna corresponding relationship table.

In view of the problem in the related technology, no effective solutions have been proposed at present.

### SUMMARY

Some embodiments of the present invention provide a touch position adjustment method, device, storage medium and electronic device.

According to an embodiment of the present invention, a touch position adjustment method is provided, which includes: determining a current wireless performance parameter of a terminal device in response to detecting that there is currently a touch action of a touch object touching the terminal device; determining a target touch position of the touch object touching the terminal device in response to determining that the current wireless performance parameter differs from a predetermined target wireless performance parameter of the terminal device by a first predetermined threshold; and giving, according to the target touch position, a prompt to adjust a current touch position of the touch object on the terminal device. And, before determining a target touch position of the touch object touching the terminal device, the method further comprising: determining a correlation between a deterioration of the wireless performance parameter of the terminal device and the touch action; and triggering a process of determining the target touch position in response to determining that the deterioration of the wireless performance parameter of the terminal device is correlated to the touch action; wherein determining a correlation between the deterioration of the wireless performance parameter of the terminal device and the touch action comprises at least one of the following: judging whether the current touch position of the touch object on the terminal device is an optimal touch position, determining that the deterioration of the wireless performance parameter of the terminal device is not correlated to the touch action in response to the current touch position being the optimal touch position, and determining that the deterioration of the wireless performance parameter of the terminal device is correlated to the touch action in response to the current touch position being not the optimal touch position; or in response to the terminal device having a switchable target antenna, switching the antenna of the terminal device from the current antenna to the target antenna, determining a wireless performance parameter after antenna switching, removing, from the wireless performance parameter after switching, a gain difference between the target antenna and the current antenna to obtain an adjusted wireless performance parameter after switching, determining a difference between the adjusted wireless performance parameter after switching and the target wireless performance parameter, determining that the deterioration of the wireless performance parameter of the terminal device is not correlated to the touch action in response to the determined difference not exceeding a second predetermined threshold, and determining that the deterioration of the wireless performance parameter of the terminal device is correlated to the touch action in response to the difference exceeding the second predetermined threshold.

According to an embodiment of the present invention, a touch position adjustment device is provided, which includes: a first determination module configured to determine a current wireless performance parameter of a terminal device in response to detecting that there is currently a touch action of a touch object touching the terminal device; a second determination module configured to determine a target touch position of the touch object touching the terminal device in response to determining that the current wireless performance parameter differs from a predetermined target wireless performance parameter of the terminal device by a first predetermined threshold; and a prompt module configured to give, according to the target touch position, a prompt to adjust a current touch position of the touch object on the terminal device.

According to another embodiment of the present invention, a storage medium is provided, the storage medium stores computer programs which, when executed by a processor, cause the processor to perform the method in the above embodiments.

According to a further embodiment of the present invention, an electronic apparatus is provided, which includes a memory and a processor, wherein the memory stores computer programs which, when executed by the processor, cause the processor to perform the method in the above embodiments.

### BRIEF DESCRIPTION OF DRAWINGS

The accompanying drawings to be described herein are used for providing further understanding of the present invention and constitute a part of the present application. Illustrative embodiments of the present invention and descriptions thereof are used for explaining the present invention, rather than constituting any inappropriate limitations to the present invention. In which:
FIG. 1 is a distribution diagram of antennas in the related technology;
FIG. 2 is a schematic diagram of OTA comparison of upper and lower antennas in left and right hands and in a free state in the related technology;
FIG. 3 is a comparison diagram of antenna efficiency of head/hand modes and upper and lower antennas in the related technology;
FIG. 4 is a schematic diagram of measured results of the return loss value in the related technology;
FIG. 5 is a schematic diagram of a mobile terminal with a metal frame in the related technology;
FIG. 6 is a hardware structure diagram of a mobile terminal in a touch position adjustment method according to an embodiment of the present invention;
FIG. 7 is a flowchart of a touch position adjustment method according to an embodiment of the present invention;
FIG. 8 is a structure diagram of a touch position adjustment apparatus according to an embodiment of the present invention;
FIG. 9 is a hardware structure diagram of a feedback terminal according to an embodiment of the present invention;
FIG. 10 is a schematic diagram of operations executed by a wireless signal detection unit according to an embodiment of the present invention;
FIG. 11 is a schematic diagram of holding postures according to an embodiment of the present invention;
FIG. 12 is an abstract view of holding postures according to an embodiment of the present invention;
FIG. 13 is a schematic diagram of touch points according to an embodiment of the present invention;
FIG. 14 is an abstract view of touch points according to an embodiment of the present invention;
FIG. 15 is a schematic diagram of frame partitions according to an embodiment of the present invention;
FIG. 16 is a diagram of sensing detection according to an embodiment of the present invention;
FIG. 17 is a diagram of light-type touch points detection according to an embodiment of the present invention;
FIG. 18 is a diagram of a directional feedback array of touch points according to an embodiment of the present invention;
FIG. 19 is a diagram of directional vibration indication of a flat motor combination and a linear motor combination according to an embodiment of the present invention;
FIG. 20 is a color feedback unit according to an embodiment of the present invention;
FIG. 21 is a schematic diagram of a holding point calibration unit according to an embodiment of the present invention;
FIG. 22 is a schematic diagram of several divided touch points at a lower part of the mobile terminal according to an embodiment of the present invention;
FIG. 23-1 is a schematic diagram of return loss measured values of frequency bands of the antenna of the mobile terminal at the holding point L0 according to an embodiment of the present invention;
FIG. 23-2 is a schematic diagram of return loss measured values of frequency bands of the antenna of the mobile terminal at the holding point L2 according to an embodiment of the present invention;
FIG. 23-3 is a schematic diagram of return loss measured values of frequency bands of the antenna of the mobile terminal at the holding point L4 according to an embodiment of the present invention;
FIG. 23-4 is a schematic diagram of return loss measured values of frequency bands of the antenna of the mobile terminal at the holding point D0 according to an embodiment of the present invention;
FIG. 23-5 is a schematic diagram of return loss measured values of frequency bands of the antenna of the mobile terminal at the holding point D1 according to an embodiment of the present invention;
FIG. 23-6 is a schematic diagram of return loss measured values of frequency bands of the antenna of the mobile terminal at the holding point D5 according to an embodiment of the present invention;
FIG. 23-7 is a schematic diagram of return loss measured values of frequency bands of the antenna of the mobile terminal at the holding point R0 according to an embodiment of the present invention;
FIG. 23-8 is a schematic diagram of return loss measured values of frequency bands of the antenna of the mobile terminal at the holding point R1 according to an embodiment of the present invention;
FIG. 23-9 is a schematic diagram of return loss measured values of frequency bands of the antenna of the mobile terminal at the holding point R3 according to an embodiment of the present invention;
FIG. 24 is a schematic diagram of RSSI test values at some holding postures and holding points according to an embodiment of the present invention; and
FIG. 25 is an operating flow diagram of a feedback adjustment device of a mobile terminal according to an embodiment of the present invention.

### DETAILED DESCRIPTION

Hereinafter, the present invention will be described in detail with reference to the drawings and in conjunction with the embodiments. It should be noted that the embodiments in the application and the features in the embodiments can be combined with each other if there is no conflict.

It should be noted that the terms "first" and "second" in the description and claims of the present invention and the above-mentioned drawings are used to distinguish similar objects, and are not necessarily used to describe a specific sequence or sequence.

Before the present invention is described, the schemes in the related technology will be described by taking a mobile terminal being touched by a user's hand as an example.

To satisfy the requirements for throughput transmission in 5G, two schemes have been proposed at present. One scheme is to directly improve the channel throughput rate by using broadband millimeter waves in combination with an array antenna. The other scheme is to adopt a SUB 6G (i.e., below 6 GHz) frequency band in combination with a multi-order MIMO or high-order carrier aggregation scheme. Due to the advantages of low difficulty and wide coverage of antennas below 6H frequency band, the latter scheme becomes a mainstream scheme in 5G at present. However, since the SUB 6G frequency band is relatively narrow, the throughput rate can be expanded only by 4×4 MIMO or 8×8 MIMO. However, due to the increase of antenna units, the layout of many antennas in the limited space of the mobile terminal has become a problem, where certain requirements for wavelength headroom should be satisfied, and certain requirements for coupling and isolation should also be satisfied. For a millimeter wave array antenna in 20-60 GHZ, there will be 2 to 4 array units, each of which contains 8, 12, 24 or 36 array sub-antennas that are distributed in each region of the mobile terminal, as shown in FIG. 1. Due to the high antenna density, no matter how the user holds the mobile terminal, one or more antennas will be directly covered or approached. By holding by hand, ultrahigh-frequency signals will be greatly attenuated, and the antenna performance will be deteriorated due to parasitic effects and coupling factors, so that the throughput and user experience are directly affected.

In the use of an intelligent mobile terminal, due to the complexity of the system structure, for example, for an all-metal mobile terminal or a mobile terminal with a metal frame, the antennas of the mobile terminal often need to be achieved by the metal frame or shell, and the metal antennas are greatly affected by the human body effect. For example, for the over-the-air (OTA) performance at a low frequency, there may be a difference of 2 to 150 DB between the free space state (that is, the touch terminal is not touched by any touch object) and the handheld state. That is, by holding by hand, the antenna performance of the terminal will be greatly deteriorated, and the call quality or data transmission quality is thus affected. According to the related statistics, the OTA performance of a non-metallic mobile terminal will also be reduced by 1 to 5 DB to a certain extent under the hand effect. Even by switching upper and lower antennas, the deterioration and reduction of the total radiated power (TRP) and the total isotropic sensitivity (TIS) of left and right hands cannot be solved. As shown in FIG. 2, there still is a difference of 2 to 7 DB between the free space state and the left/right hand mode.

For the antennas of the mobile terminal, the reason why hands will affect the antennas of the mobile terminal is that the user's head and hands are high-loss mediums which have a great influence on the antenna performance, mainly manifested in antenna impedance matching, antenna efficiency, antenna isolation, radiation efficiency, directivity and the like. In the handheld state, different touch points will lead to the deviation of resonance frequency points in a certain frequency band of the antenna, for example, deviating from 850 MHZ to 750 MHZ, or lead to the change in the depth of resonance. For example, the depth of resonance in the non-handheld free space state is -18 dB, while the depth of resonance in the handheld state is -25 dB. That is, the antenna efficiency in the handheld state is improved. Moreover, in different frequency bands, the antenna efficiency in the presence of the head/hand varies greatly, as shown in FIG. 3.

The influence of hands on the antenna will be described below. A hand is equivalent to a dielectric body with a high dielectric constant surrounding the antenna. For example, the hand has a dielectric constant of 35 and an electrical conductivity of 0.7. When held by hand, the resonant frequency band, return loss, impedance, bandwidth, antenna efficiency, radiation pattern and the like of the antenna will be changed. In the case of a wrong holding posture, the call completion rate of the user's mobile will be affected in severe circumstances, resulting in call drop rate, call jam and data transmission interruption.

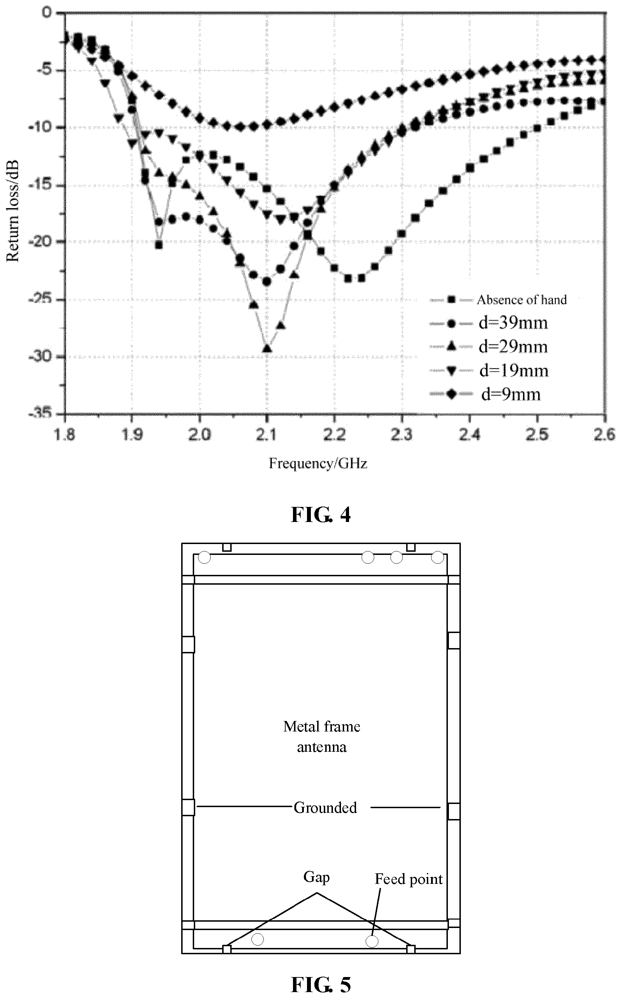

The reasons and parameters of the hand affecting the antennas of the terminal will be described below.
1. When the mobile terminal is held by hand, as the hand is close to an antenna of the mobile terminal, the hand has a mutual coupling effect on the antenna of the mobile terminal and will also change the current impedance matching position of the antenna, thereby resulting in the frequency deviation of resonance points of the antenna and changing the bandwidth of frequency bands covered by the antenna. If the bandwidth is narrowed and deviates from the current operating frequency band, the antenna performance will be greatly affected. Suppose the distance between the hand and a certain antenna of the mobile terminal is L, the measured results of the return loss value under different L are shown in FIG. 4.

For a mobile terminal with a metal shell or a metal frame, in a handheld mode, the reference ground for the antennas of the mobile terminal is changed, and the overall effect of the antennas is thus affected.

Holding by hand will change the radiation pattern of the antennas from omnidirectional radiation to heterotypic radiation. The heterotypic radiation will change the correlation between antennas. Meanwhile, as a large conductor medium, the hand will absorb electromagnetic waves in the corresponding direction, resulting in electromagnetic loss in the radiation direction. When the holding position is improper, the maximum absorption loss may be up to 75%, thereby affecting the communication quality.

Holding by hand will affect the antenna efficiency of each antenna, and thus affect the transmission distance and quality of antenna signals. By taking a global system for mobile communication (GSM) antenna as an example, the efficiency will be reduced by 45% in the presence of a hand.

The presence of a hand will change the received signal noise ratio (SNR) of the mobile terminal. As shown in FIG. 5, the SNR in a handheld state is obviously lower than that in a non-handheld state.

By taking the mobile terminal with a metal frame shown in FIG. 5 as an example, when the metal frame surrounds the mobile terminal as a whole, the coupling resonance will increase. Since the coupling effect is the increase of the coupling Q value, the radiation efficiency of the antenna will be reduced, and the antenna efficiency will also be reduced. By breaking the integrity of the frame by using a metal gap in it, the radiation efficiency can be changed, and the coupling Q value can be decreased. The antenna resonance design of corresponding frequency points is achieved by grounding and slotting antennas on the metal frame. If a slotted point is held during holding by hand, or since the human body itself is a dielectric medium, and the grounding environment of the antenna will be changed, and the performance of the metal antenna will be deteriorated obviously.

Similarly, although a mobile terminal user adopts WIFI connection instead of cellular wireless connection in the process of watching live video or playing mobile games, video pictures are often jammed, while it is relatively smooth when the mobile terminal is placed on a holder. Actually, this is mainly because the antenna performance is deteriorated when the WIFI antenna is held by hand. For example, the signal is full when the mobile terminal is placed on a holder or a desktop; but there is only one or two bars of signal when the mobile terminal is held by hand. However, for WIFI/BT (Bluetooth)/GPS antennas, there are basically no antenna switching and tuning circuits, thus the data service and satellite searching performances are greatly affected currently, and there is no good solution.

In the conventional design, generally, the main communication antenna of the mobile terminal is arranged on the bottom of the mobile terminal, while the GPS antenna, the WIFI antenna, the diversity antenna and the MIMO antenna are arranged on the top or side of the mobile terminal. Therefore, when the mobile terminal is held by hand in a vertical state, the bottom antenna will be greatly affected by the hand and thus be deteriorated. When the user uses the mobile terminal in a landscape state, the performance of the WIFI, GPS or diversity antenna will be greatly affected by the hand and be deteriorated. Therefore, the performances in different postures cannot be balanced and satisfied, which is also a big problem at present.

Due to the difference in size between mobile terminals, in the OTA test, there are a left-hand mode and a right-hand mode. At present, a big-hand mode and a small-hand model are also added. It can be seen from the actual test data that, in the same handheld state, the antenna performances of left-hand and right-hand mobile terminals are very different, and the test results for big and small hands are also very different. However, this problem is not yet solved in the previous technologies. All antenna switching is only general switching and adjustment of upper and lower antennas, and the position of the hand, the size of the hand and the position of the specific holding point are not detected. Therefore, the antenna performance of the mobile terminal is always not optimal.

Similarly, in the actual use process of users, there will be left-hand and right-hand users, and men's hands, women's hands and children's hands are different in size. Therefore, how to adjust the antenna performance or change the touch point for different touch objects is a new problem to be solved by the embodiments of the present invention.

At present, the problems mentioned above are not taken into consideration in the design of most mobile terminals. Recently, some solutions have been proposed in mobile terminals to alleviate the problems mentioned above, mainly including the following: 1. a switch is connected by a sensing chip to switch left and right antennas or upper and lower antennas. 2. upper and lower antennas of the mobile terminal are switched by detecting certain signal parameters through an ASDIV technology.

The solutions in the existing technology will have the following problems.

In most designs, the deterioration of the signal strength is detected after a user holds a mobile terminal by hand, and antenna matching and tuning is then performed.

For example, in one related patent, a shielded state of the antenna body in the lower part of the mobile terminal is sensed by a sensing module (which senses change information of the parasitic capacitance generated when a limb moves close to the sensing unit), and a tuning state of the tuning module (variable capacitor or variable inductor) is switched according to the shielded state, thereby avoiding the deterioration of the antenna performance, maintaining the balance between left-hand and right-hand performances and improving the antenna performance when the mobile terminal is held by hand.

Another related patent also relates to a solution, which is achieved by detecting the deterioration of the signal strength after being held by hand and switching the antenna from bottom to top. For example, by detecting the received signal strength of the currently used antenna of the electronic equipment and the holding state of the electronic equipment, it is determined whether to perform antenna switching.

These solutions have the following disadvantages: only the presence of the hand holding can be detected, but the details of the holding posture, for example, which finger touches the terminal or which part is touched, cannot be determined, so different antenna adjustments cannot be performed for the holding details.

The present invention will be described below in conjunction with specific embodiments.

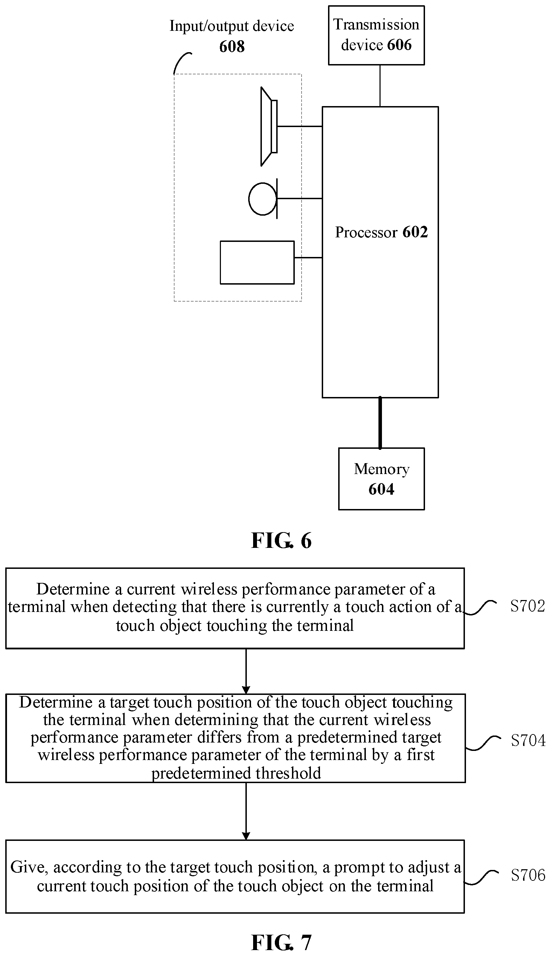

The method embodiments provided by the present invention may be executed in mobile terminals, computer terminals or similar arithmetic devices. By taking running on a mobile terminal as an example, FIG. 6 is a hardware structure diagram of a mobile terminal in a touch position adjustment method according to an embodiment of the present invention. As shown in FIG. 6, the mobile terminal may include one or more (only one in FIG. 6) processor 602 (the processor 602 may include, but not limited to, a processing device such as a microprocessor unit (MCU) or a programmable logic device (FPGA) and a memory 604 configured for storing data. Optionally, the mobile terminal may further include a transmission device 606 for communication functions and an input/output device 608. It should be understood by a person of ordinary skill in the art that the structure shown in FIG. 6 is only schematic and not intended to limit the structure of the mobile terminal. For example, the mobile terminal may further include more or less components than those shown in FIG. 6, or have a configuration different from that shown in FIG. 6.

The memory 604 may be configured for storing computer programs, for example, software programs and modules of applications, such as computer programs corresponding to the touch position adjustment method in the embodiments of the present invention. The processor 602 executes various functional applications and data processing, i.e., performing the method described above, by running the computer programs stored in the memory 604. The memory 604 may include high-speed random access memories, or may include non-volatile memories, for example, one or more magnetic storage devices, flash memories or other non-volatile solid-state memories. In some examples, the memory 604 may further include memories remotely arranged relative to the processor 602. These remote memories may be connected to the mobile terminal via a network. Examples of the network include, but not limited to, Internet, Intranet, local area networks, mobile communication networks and combinations thereof.

The transmission device 606 is configured for receiving or transmitting data via a network. Specific examples of the network may include wireless networks provided by a communication provider for the mobile terminal. In one example, the transmission device 606 includes a network interface controller (NIC) which can be connected to other network devices through base stations so as to communicate with the Internet. In one example, the transmission device 606 may be a radio frequency (RF) module which is configured for communicating with the Internet in a wireless manner.

In this embodiment, a touch position adjustment method which can be run in the mobile terminal is provided. FIG. 7 is a flowchart of the touch position adjustment method according to an embodiment of the present invention. As shown in FIG. 7, the flow includes the following steps.

In a step of S702, a current wireless performance parameter of a terminal is determined when it is detected that there is currently a touch action of a touch object touching the terminal;
In a step of S704, a target touch position of the touch object touching the terminal is determined when it is detected that the current wireless performance parameter differs from a predetermined target wireless performance parameter of the terminal by a first predetermined threshold; and
In a step of S706, according to the target touch position, a prompt is given to adjust a current touch position of the touch object on the terminal.

The above operations may be executed by the mobile terminal described above. Certainly, the operations may also be executed by other terminals with basic communication functions. In this embodiment, the touch object is not limited in type and size. For example, the touch object may be a hand, including hands of various sizes or hands of persons of different genders, or may be a face or other types of touch objects.

In the embodiment, the target touch position of the touch object can be determined according to the touch action of the touch object so that a prompt is given to adjust the touch position of the touch object on the terminal, that is, an optimal touch position corresponding to the touch object can be determined so that a prompt can be given to an operator, who operates the touch object, to move the touch object to the optimal touch position. Thus, the wireless performance of the terminal can be effectively improved, the problem in the related technology that the wireless performance of the terminal will be degraded when the touch object touches the terminal is effectively solved, thus effectively improving the wireless performance of the terminal.

In an optional embodiment, the method further includes the following steps after detecting that there is currently a touch action of a touch object touching the terminal: determining the current touch position; and, recording a correspondence between the current touch position and the wireless performance parameter into a wireless signal model storage module after the determining a current wireless performance parameter, the wireless signal model storage module being configured for recording correspondences between touch positions and wireless performance parameters; and, the determining a target touch position of the touch object touching the terminal includes: determining a target correspondence from the wireless signal model storage module according to the current wireless performance parameter, and determining a touch position corresponding to the target correspondence as the target touch position. In this embodiment, correspondences between detected touch positions and wireless performance parameters can be recorded and stored correspondingly, so that an optimal touch position (a touch position corresponding to a wireless performance parameter having the maximum signal strength is used as the optimal touch position) corresponding to some specific parameters (for example, a current activation module configured for currently activating wireless signals and the current operating frequency band of the current activation module) included in the current wireless performance parameter can be determined according to multiple correspondences. This is because, in the recorded correspondences, there may be multiple touch positions corresponding to some specific parameters in the current wireless performance parameter. Thus, a prompt can be given to the operator to move the touch object to the determined optimal touch position.

**In** an optional embodiment, the determining a current wireless performance parameter of the terminal includes: determining a current activation module in the terminal configured for currently activating a wireless signal; determining a current operating frequency band of the activation module; determining a current signal strength of the activation module under the current operating frequency band; and, generating the current wireless performance parameter based on the current activation module, the current operating frequency band and the current signal strength. **In** this embodiment, the wireless performance parameter is generated based on the current activation module, the current operating frequency band and the current wireless performance parameter. However, in practical applications, the wireless performance parameter may also be generated based on more parameters.

In an optional embodiment, the determining a target correspondence from the wireless signal model storage module according to the current wireless performance parameter includes: determining the current activation module and the current operating frequency band corresponding to the wireless performance parameter; determining, from the wireless signal model storage module, wireless performance parameters corresponding to the current activation module and the current operating frequency band, and using the wireless performance parameters as auxiliary wireless performance parameters; determining a signal strength corresponding to each auxiliary wireless performance parameter, and using a determined auxiliary wireless performance parameter having the maximum signal strength as a target performance parameter; and, determining a correspondence corresponding to the target performance parameter as the target correspondence. In this embodiment, a plurality of wireless performance parameters corresponding to the current activation module and the current operating frequency band can be determined from the wireless signal model storage module, so that a wireless performance parameter having the maximum signal strength is determined from the plurality of determined wireless performance parameters to be used as the final wireless performance parameter, and the touch position corresponding to the final wireless performance parameter is used as the final touch position to which the touch object is to be moved. That is, when the current touch object touches the final touch position, the current signal strength can be maximal. Thus, the communication performance is effectively improved.

In an optional embodiment, the method further includes: recording, into the wireless signal model storage model, a wireless performance parameter of each activation module configured for activating wireless signals in the terminal under a free space corresponding to each frequency band, the free space indicates that the terminal is not touched by any touch object; and, using the wireless performance parameter of each activation module under the free space corresponding to each frequency band as a target wireless performance parameter of each activation module under each frequency band. In this embodiment, storing the wireless performance parameter of each activation module under the free space corresponding to each frequency band is mainly for comparing whether the subsequently detected wireless performance parameter is an enhanced or weakened wireless performance parameter, so as to determine whether it is necessary to adjust the touch position corresponding to the subsequently detected wireless performance parameter.

In an optional embodiment, the method further includes the following steps after the determining a current wireless performance parameter of the terminal: determining change values of parameters of a radio frequency front-end circuit included in the terminal before and after the touch action occurs, the parameters including amplitude, phase and standing wave; and, adjusting the current wireless performance parameter based on the change values of the parameters, and using the adjusted wireless performance parameter as the updated current wireless performance parameter.

In an optional embodiment, before giving, according to the target touch position, a prompt to adjust a current touch position of the touch object on the terminal, the method further includes: determining a current placement state and the current touch position of the terminal; and, giving, according to the target touch position, a prompt to adjust a current touch position of the touch object on the terminal includes: determining, according to the current placement state, an orientation of the target touch position relative to the current touch position, and giving a prompt to adjust the current touch potion of the touch object on the terminal to the orientation. In this embodiment, in different placement states, for example, landscape or portrait placement, the corresponding adjustment directions are different. Therefore, in this embodiment, prompts for corresponding direction adjustment can be given for different placement states.

In an optional embodiment, determining the current touch position on an edge side of the terminal by using a plurality of sensors built in the edge side of the terminal, the plurality of sensors being built in the edge side of the terminal in an predetermined arrangement order and at a predetermined arrangement interval, the plurality of sensors including at least one of the following: a pressure sensor, a photosensitive sensor, a proximity sensor, a temperature sensor or a specific absorption rate (SAR) sensor. In this embodiment, a plurality of sensors can be arranged in the edge side (for example, a position close to four edges of the mobile terminal). The type of the plurality of sensors is not limited in this embodiment as long as the plurality of sensors can detect the touch action of the touch object. In this embodiment, the plurality of sensors may have multiple arrangement orders. The plurality of sensors may be arranged at equal intervals or at unequal intervals. For example, for a mobile terminal, the probability of holding the left edge and right edge of the mobile terminal is relatively high, so a plurality of sensors may be densely arranged in the left and right edges of the mobile terminal, and fewer sensors may be arranged in upper and lower edges of the mobile terminal.

In an optional embodiment, the method further includes the following steps before the determining a target touch position of the touch object touching the terminal: determining a correlation between deterioration of wireless performance parameters of the terminal and the touch action; and, triggering a process of determining the target touch position when determining that the deterioration of wireless performance parameters of the terminal is correlated to the touch action. In this embodiment, there are actually many possible reasons for the deterioration of the wireless performance parameter of the terminal, some of which are caused by a touch object touching the terminal, and some of which are related to external factors, for example, the deterioration of signals of a cell base station, the deterioration of the use environment and the like. Only when the deterioration of the wireless performance parameter is caused by a touch object touching the terminal, the touch position will be adjusted. According to this embodiment, unnecessary prompt operations of adjusting the touch position are reduced.

In an optional embodiment, the determining a correlation between the deterioration of wireless performance parameters of the terminal and the touch action includes at least one of the following: judging whether the current touch position of the touch object on the terminal is an optimal touch position, determining that the deterioration of wireless performance parameters of the terminal is not correlated to the touch action if the current touch position is the optimal touch position, and determining that the deterioration of the wireless performance parameters of the terminal is correlated to the touch action if the current touch position is not the optimal touch position; and, if the terminal has a switchable target antenna, switching the antenna of the terminal from the current antenna to the target antenna, determining a wireless performance parameter after antenna switching, removing, from the wireless performance parameter after switching, a gain difference between the target antenna and the current antenna to obtain an adjusted wireless performance parameter after switching, determining a difference between the adjusted wireless performance parameter after switching and the target wireless performance parameter, determining that the deterioration of the wireless performance parameters of the terminal is not correlated to the touch action if the determined difference does not exceeds a second predetermined threshold, and determining that the deterioration of the wireless performance parameters of the terminal is correlated to the touch action if the difference exceeds the second predetermined threshold. This embodiment mainly focuses on how to determine whether the deterioration of the current wireless performance parameter is correlated to the touch action. The above two embodiments for determination are preferred embodiments. Certainly, other determination methods can also be adopted.

In an optional embodiment, giving, according to the target touch position, a prompt to adjust a current touch position of the touch object on the terminal includes: giving, according to the target touch position and in a preset default prompt mode, a prompt to adjust the current touch position of the touch object on the terminal; or, determining an application currently running in the terminal, determining a preset prompt mode corresponding to the application, and giving, according to the target touch position and in the corresponding prompt mode, a prompt to adjust the current touch position of the touch object on the terminal. In this embodiment, the default prompt mode may be preset as voice prompt, light prompt, text prompt or light prompt. In addition, a corresponding prompt can be given by comprehensively considering currently running applications. If the current application is a video playback application, a voice prompt needs to be avoided, because it is likely to interrupt the user watching video if the voice prompt is used. For example, a prompt may be given in a text prompt mode.

In an optional embodiment, giving, according to the target touch position, a prompt to adjust a current touch position of the touch object on the terminal includes one of the following steps: giving, according to the target touch position and in a vibration prompt mode, a prompt to adjust the current touch position of the touch object on the terminal; giving, according to the target touch position and in a display prompt mode, a prompt to adjust the current touch position of the touch object on the terminal; and, giving, according to the target touch position and in a voice prompt mode, a prompt to adjust the current touch position of the touch object on the terminal. In this embodiment, the display prompt mode may include text prompt, light prompt and the like. In addition, it is also to be noted that the above several prompt modes are only examples, and other feasible prompt modes may be adopted in practical applications.

In an optional embodiment, if the prompt is given in the vibration prompt mode, a vibration amplitude and/or a vibration frequency is decreased when detecting that the touch object moves close to the target touch position from the current touch position, and the vibration amplitude and/or the vibration frequency is increased when detecting that the touch object moves away from the target touch position from the current touch position.

In an optional embodiment, if the prompt is given in the vibration prompt mode, the vibration prompt mode is achieved through vibration by at least two motors built in the terminal, the type of the motors includes at least one of the following: cylindrical motor, linear motor and ceramic piezoelectric motor; and/or, the motors are capable of rotating forward and backward; and/or, vibrators of the motors are capable of moving up and down.

In an optional embodiment, if the prompt is given in the display prompt mode, a color corresponding to a value of influence of each touch position on antenna performance is displayed on each touch position; or, a specific color is displayed at only the target touch position. In this embodiment, the adopted display prompt mode is a light prompt mode. However, a text prompt mode may be adopted in practical applications.

In an optional embodiment, the method further includes: receiving a calibration instruction; and, calibrating, according to the calibration instruction, an contact object antenna effect compensation for the activation module configured for activating wireless signals in the terminal at each frequency point and for the contact object at each touch point. The terminal is generally calibrated before leaving the factory. In this embodiment, a secondary calibration may also be performed the user.

From the above description of the embodiments, a person of ordinary skill in the art can clearly understand that the methods according to the above embodiments may be performed by software and necessary general-purpose hardware platforms. Certainly, the methods may also be performed by hardware. However, in many cases, the former is a preferred embodiment. Based on this understanding, the technical schemes of the present invention may be essentially embodied in form of software products, or some of the technical schemes that contribute to the existing technology may be embodied in form of software products. The computer software products are stored in a storage medium (e.g., ROM/RAM, magnetic disks or optional disks), and include a number of instructions to enable a computer device (which may be a mobile terminal, a computer, a server, a network device and the like) to perform the methods according to various embodiments of the present invention.

In this embodiment, a touch position adjustment apparatus is further provided. This device is configured for performing the above embodiments and preferred embodiments, which will not be repeated here. As used hereinafter, the term "module" may be a combination of software and/or hardware that performs predetermined functions. Although the device described in the following embodiments is preferably performed by software, it is and can be contemplated to implement the device by hardware or a combination of software and hardware.

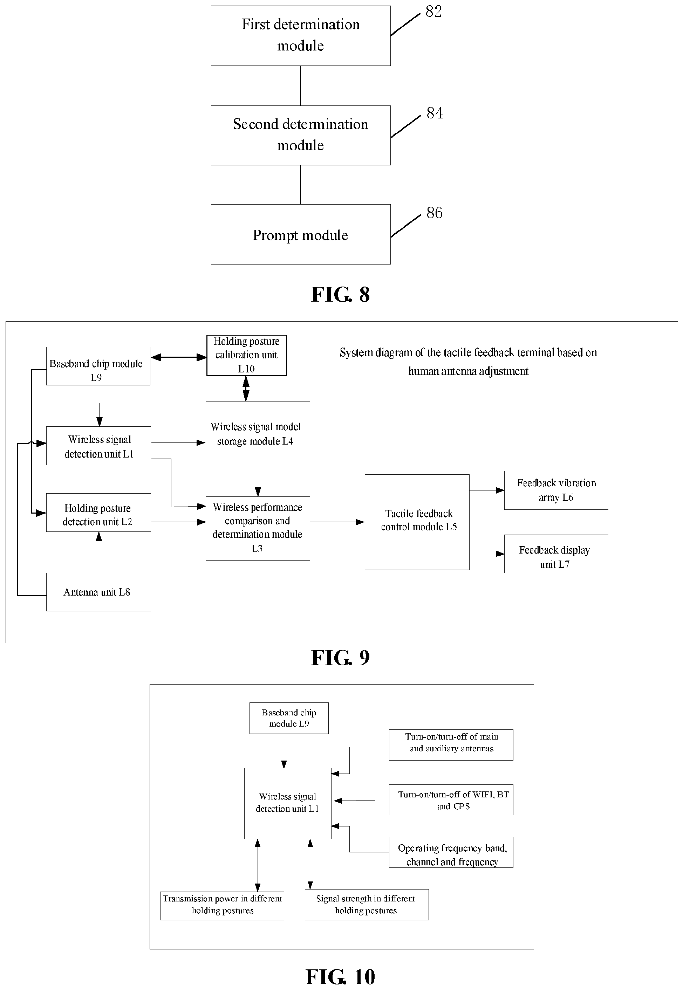

FIG. 8 is a structure diagram of the touch position adjustment apparatus according to an embodiment of the present invention. As shown in FIG. 8, the device includes:
a first determination module 82 configured for determining a current wireless performance parameter of a terminal when detecting that there is currently a touch action of a touch object touching the terminal; a second determination module 84 configured for determining a target touch position of the touch object touching the terminal when determining that the current wireless performance parameter differs from a predetermined target wireless performance parameter of the terminal by a first predetermined threshold; and, a prompt module 86 configured for giving, according to the target touch position, a prompt to adjust a current touch position of the touch object on the terminal.

In an optional embodiment, the device is further configured for performing the following steps after detecting that there is currently a touch action of a touch object touching the terminal: determining the current touch position; and, recording a correspondence between the current touch position and the wireless performance parameter into a wireless signal model storage module after the determining a current wireless performance parameter, the wireless signal model storage module being configured for recording correspondences between touch positions and wireless performance parameters; and, the second determination module 84 is configured for determining a target correspondence from the wireless signal model storage module according to the current wireless performance parameter, and determining a touch position corresponding to the target correspondence as the target touch position.

In an optional embodiment, the first determination module 82 includes: a first determination unit configured for determining a current activation module in the terminal configured for currently activating a wireless signal; a second determination unit configured for determining a current operating frequency band of the activation module; a third determination unit configured for determining a current signal strength of the activation module under the current operating frequency band; and, a generation unit configured for generating the current wireless performance parameter based on the current activation module, the current operating frequency band and the current signal strength.

In an optional embodiment, the first determination unit can determine the target correspondence in the following way: determining the current activation module and the current operating frequency band corresponding to the wireless performance parameter; determining, from the wireless signal model storage module, wireless performance parameters corresponding to the current activation module and the current operating frequency band, and using the wireless performance parameters as auxiliary wireless performance parameters; determining a signal strength corresponding to each auxiliary wireless performance parameter, and using the determined auxiliary wireless performance parameter having the maximum signal strength as a target performance parameter; and, determining a correspondence corresponding to the target performance parameter as the target correspondence.

In an optional embodiment, the device is further configured for recording, into the wireless signal model storage model, a wireless performance parameter of each activation module configured for activating wireless signals in the terminal under a free space corresponding to each frequency band, the free space indicates that the terminal is not touched by any touch object; and, using the wireless performance parameter of each activation module under the free space corresponding to each frequency band as a target wireless performance parameter of each activation module under each frequency band.

In an optional embodiment, the device is further configured for performing the following steps after the determining a current wireless performance parameter of the terminal: determining change values of parameters of a radio frequency front-end circuit included in the terminal before and after the touch action occurs, the parameters including amplitude, phase and standing wave; and, adjusting the current wireless performance parameter based on the change values of the parameters, and using the adjusted wireless performance parameter as the updated current wireless performance parameter.

In an optional embodiment, the device is further configured for performing the following steps before giving, according to the target touch position, a prompt to adjust a current touch position of the touch object on the terminal: determining a current placement state and the current touch position of the terminal; and, the prompt module 86 is configured for determining, according to the current placement state, an orientation of the target touch position relative to the current touch position, and giving a prompt to adjust the current touch potion of the touch object on the terminal to the orientation.

In an optional embodiment, the device is capable of determining the current touch position in the following way: determining the current touch position on an edge side of the terminal by using a plurality of sensors built in the edge side of the terminal, the plurality of sensors being built in the edge side of the terminal in an predetermined arrangement order and at a predetermined arrangement interval, the plurality of sensors including at least one of the following: a pressure sensor, a photosensitive sensor, a proximity sensor, a temperature sensor or a specific absorption rate (SAR) sensor.

In an optional embodiment, the device is further configured for performing the following steps before the determining a target touch position of the touch object touching the terminal: determining a correlation between deterioration of wireless performance parameters of the terminal and the touch action; and, triggering a process of determining the target touch position when determining that the deterioration of wireless performance parameters of the terminal is correlated to the touch action.

In an optional embodiment, the device is capable of determining a correlation between the deterioration of wireless performance parameters of the terminal and the touch action in at least one of the following ways: judging whether the current touch position of the touch object on the terminal is an optimal touch position, determining that the deterioration of wireless performance parameters of the terminal is not correlated to the touch action if the current touch position is the optimal touch position, and determining that the deterioration of the wireless performance parameters of the terminal is correlated to the touch action if the current touch position is not the optimal touch position; or, if the terminal has a switchable target antenna, switching the antenna of the terminal from the current antenna to the target antenna, determining a wireless performance parameter after antenna switching, removing, from the wireless performance parameter after switching, a gain difference between the target antenna and the current antenna to obtain an adjusted wireless performance parameter after switching, determining a difference between the adjusted wireless performance parameter after switching and the target wireless performance parameter, determining that the deterioration of the wireless performance parameters of the terminal is not correlated to the touch action if the determined difference does not exceeds a second predetermined threshold, and determining that the deterioration of the wireless performance parameters of the terminal is correlated to the touch action if the difference exceeds the second predetermined threshold.

In an optional embodiment, the prompt module 86 is configured for: giving, , according to the target touch position and in a preset default prompt mode, a prompt to adjust the current touch position of the touch object on the terminal; or, determining an application currently running in the terminal, determining a preset prompt mode corresponding to the application, and giving, according to the target touch position and in the corresponding prompt mode, a prompt to adjust the current touch position of the touch object on the terminal.

In an optional embodiment, the prompt module 86 is configured for executing one of the following operations: giving, according to the target touch position and in a vibration prompt mode, a prompt to adjust the current touch position of the touch object on the terminal; giving, according to the target touch position and in a display prompt mode, a prompt to adjust the current touch position of the touch object on the terminal; or, giving, according to the target touch position and in a voice prompt mode, a prompt to adjust the current touch position of the touch object on the terminal.

In an optional embodiment, if the terminal gives a prompt in the vibration prompt mode, a vibration amplitude and/or a vibration frequency is decreased when detecting that the touch object moves close to the target touch position from the current touch position, and the vibration amplitude and/or the vibration frequency is increased when detecting that the touch object moves away from the target touch position from the current touch position.

In an optional embodiment, if the terminal gives a prompt in the vibration prompt mode, the vibration prompt mode is achieved through vibration by at least two motors built in the terminal, the type of the motors includes at least one of the following: cylindrical motor, linear motor and ceramic piezoelectric motor; and/or, the motors are capable of rotating forward and backward; and/or, vibrators of the motors are capable of moving up and down.

In an optional embodiment, if the terminal gives a prompt in the display prompt mode, a color corresponding to a value of influence of each touch position on antenna performance is displayed on each touch position; or, a specific color is displayed at only the target touch position.

In an optional embodiment, the terminal is further configured for: receiving a calibration instruction; and, calibrating, according to the calibration instruction, an contact object antenna effect compensation for the activation module configured for activating the wireless signal in the terminal at each frequency point and for the contact object at each touch point.

The present invention will be described below by taking the touch object being a hand and the terminal being a mobile terminal as an example.

FIG. 9 is a hardware structure diagram of a terminal according to an embodiment of the present invention. As shown in FIG. 9, the mobile terminal includes: a wireless signal detection unit L1, a holding posture detection unit L2, a wireless performance comparison and judgment module L3, a wireless signal model storage module L4, a tactile feedback control module L5, a feedback vibration array L6, a feedback display unit L7, an antenna unit L8, a baseband chip module L9 and a holding posture calibration module L10.

The terminal will be described below.

The wireless signal detection unit L1 (corresponding to the first determination module 82 in this text) is connected to the baseband module and the wireless signal model storage module to acquire a wireless signal strength of the terminal after touched by hand. As shown in FIG. 10, the wireless signal detection unit 11 is mainly configured for completing three detection functions. Firstly, the on state of the current wireless signal is detected, for example, turn-on of the main antenna, turn-on of the diversity antenna, turn-on of the WIFI module, turn-on of the Bluetooth module and the like. Then, this unit will detect under which frequency band the module is operating currently, for example, a low, medium or high frequency, or directly refining to a frequency band range, for example, 600 M to 700 M. Meanwhile, this unit can directly detect the current cell channel number and convert it into a corresponding frequency range. Finally, the wireless signal detection unit detects the signal strength of the wireless module turned on currently in the mobile terminal. Meanwhile, this unit is also responsible for refreshing and recording detected values in different holding postures into the wireless signal model storage module for use by the wireless performance comparison and judgment module L3.

The wireless signal detection unit L1 further includes a circuit for detecting standing waves when the human body touches an antenna, and is achieved by the RF front-end circuit of the terminal as well as a coupling circuit and a detection circuit. The coupling circuit samples the changes in amplitude and phase after an antenna load is applied to the transmitting circuit. The coupling circuit is classified into two parts, a forward coupling circuit and a backward coupling circuit. The forward coupling circuit adopts the coupler of the mobile terminal itself. The 50 Ω grounding feedback circuit acquires signals transmitted by the mobile terminal to be used as incoming signals. The backward coupling circuit may be arranged in rear of a frequency divider or switch of the RF front-end circuit, or may be directly arranged in front of a matching circuit of the antenna of the mobile terminal to acquire reflected signals transmitted by the mobile terminal or incoming signals entering the antenna. To improve the accuracy of feedback acquisition, an isolator is additionally provided between the forward and backward coupling circuits to prevent the leakage of incoming signals and reflected signals, and a narrowband high-Q filter is also additionally provided to filter harmonic waves of other external frequency signals or transmitted signals. The filtered forward and backward sampling signals pass through a detection circuit, and then pass through a differential amplification circuit and a frequency mixing circuit to obtain corresponding amplitude and phase signals. The signals are converted into digital signals by a diode, then input into the baseband chip of the mobile terminal and converted into corresponding standing wave specific values or reflection coefficient values.

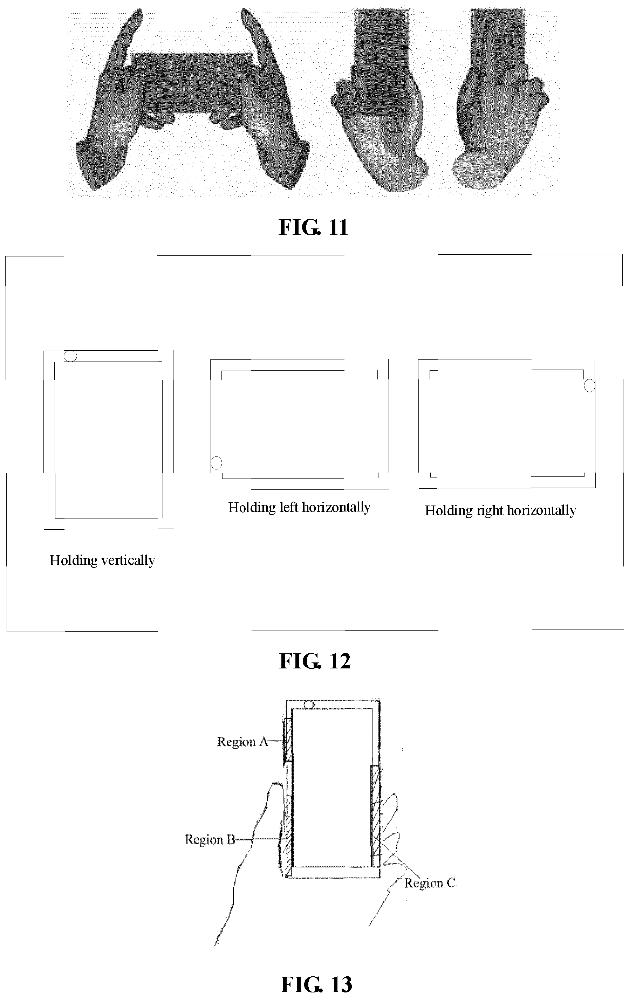

The holding posture detection unit L2 is connected to the baseband chip module to detect the holding posture and touch point position of the current user's mobile terminal. As shown in FIGS. 11 and 12, the holding posture commonly used by the user may be holding horizontally, holding vertically, holding by the left hand and holding by the right hand.

Holding vertically may be divided into holding at different positions, for example, at A, B and C points, as shown in FIG. 13.

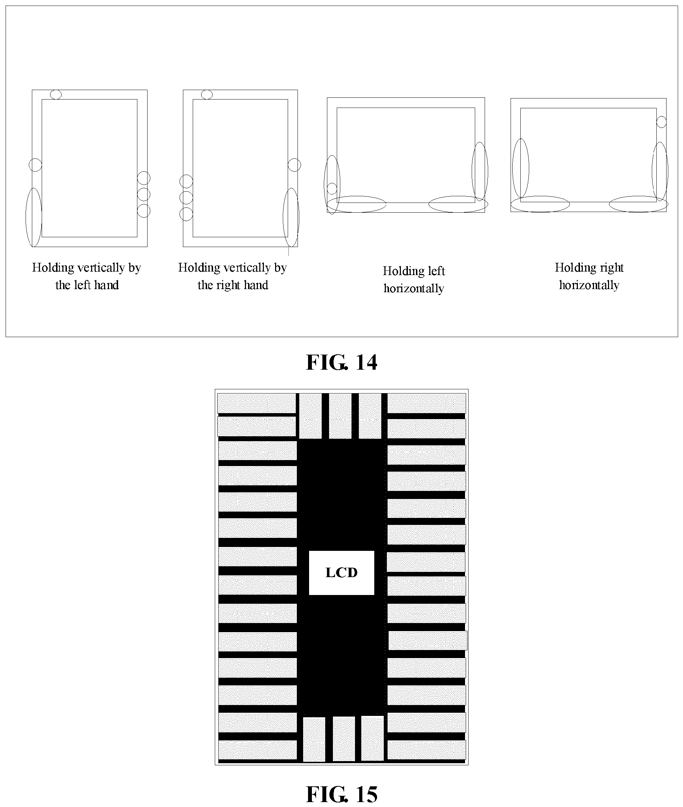

The schematic diagram of holding points in different holding postures is shown in FIG. 14.

By an acceleration sensor built in the mobile terminal, it can be judged whether the mobile terminal is in a landscape mode or a portrait mode. Meanwhile, by application and picture detection, it can be detected that the mobile terminal is in a landscape or portrait display mode currently.

The holding posture detection unit L2 can detect different holding points of the current fingers by a touch point detection algorithm. The touch point detection method may be of a pressure type, induction type, ray type, temperature type and the like.

By taking a mobile terminal with a narrow frame, a frameless mobile terminal or a mobile terminal with a curved screen as an example, since the frame of the mobile terminal can be directly contacted or touched when the user holds the mobile terminal, the edge of the mobile terminal is divided into several sections, as shown in FIG. 15.

The pressure-type method is suitable for the existing mobile terminals with a curved screen or a narrow frame. The touch point pressure of each finger after the user holds the mobile terminal is detected by each detection point distributed on the edge of the mobile terminal with a curved surface or a narrow frame, and then converted into a touch point graph.

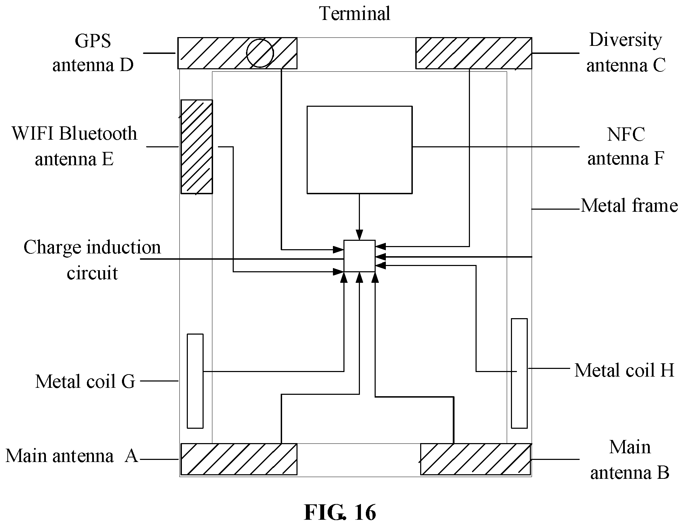

Meanwhile, for a mobile terminal with a metal frame, each branch node on the metal frame is connected by an SAR-reducing sensing chip. As shown in FIG. 16, when each section of the metal frame is touched by the user's finger, a valid value of 1 will be returned; and, if the mobile terminal is not touched, an invalid value of 0 will be returned, and finally converted into a touch point graph. The signal feed point of each antenna branch in the antenna unit is connected to the SAR-reducing chip to detect whether the finger or palm is currently in contact with a corresponding protection plane of the antenna. The FPC or metal frame where the antenna of the mobile terminal is located is equivalent to a protection plane. The SAR-reducing chip contains a capacitive sensing chip, and the capacitive sensing chip is connected to the signal feed point of each antenna by PCB wiring, i.e., being connected to the projection plane corresponding to the antenna or frame. When the user's finger or palm comes into contact with a corresponding part of the mobile terminal, the sensing signal will detect the reflected capacitance signal, that is, it can be judged whether this part is held or touched by the user's finger or palm.

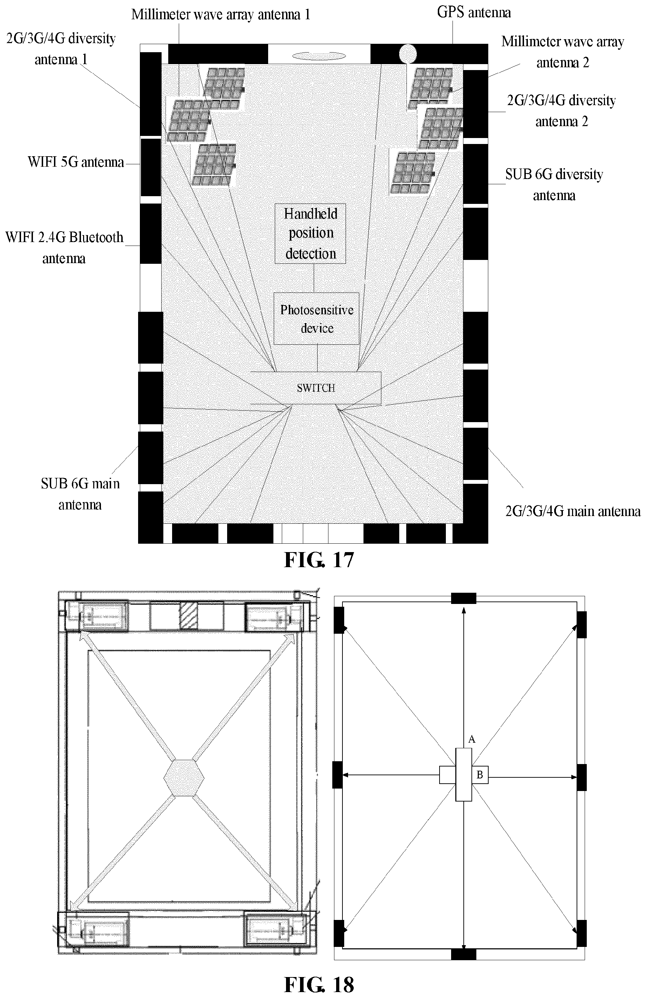

Meanwhile, in this example, the current holding posture and touch point of the user's finger can also be detected by the device shown in FIG. 17. A photosensitive device built in the mobile terminal is connected to a multi-way switch. The handheld part corresponding to the frame of the mobile terminal is divided into several black sections shown in FIG. 17, and each section is a common contact point of the user. When a certain section is touched by a finger, the light sensation of the corresponding section will be reduced obviously. By detecting the change in light sensation of this section, it is judged whether there is a user's finger in the current section.

The wireless performance comparison and judgment module L3 (corresponding to the second determination module 84 described above) is connected to the wireless signal detection unit L1 and the wireless signal model storage module L4 to acquire and compare the wireless performance in the current holding posture. Here, the wireless performance includes strength parameters, data transmission throughput, call audio quality and the like of main diversities of each communication system, for example, RSRP of LTE, RXCP of WCDMA and CDMA, RSSI of GSM, and further includes RSSI of WIFI and Bluetooth, CN0 of GPS and the like. The mobile terminal firstly acquires a signal strength in the absence-of-hand mode (e.g., a signal strength when the mobile terminal is placed on a desktop) as a reference value, then acquires a signal strength value in the handheld state and compares the two values. If the signal strength in the handheld state is too low, an optimal holding posture will be automatically pushed according to the current wireless service. If the signal strength in the handheld state is the best currently, no push or feedback will be prompted. Similarly, if the current data transmission throughput is detected, the current data transmission throughput is also compared with a wireless signal reference model value. If the current data transmission throughput is lower than the reference value, it can be determined that the current wireless performance is reduced. In a cellular or Bluetooth call service, if an obvious jam report is detected, it can also be determined by comparison that the wireless performance service in the current holding posture is reduced and needs to be switched.

This module may further include a signal judgment unit to detect whether the change or deterioration of signal is correlated to the holding posture or holding point.

When the signal of the mobile terminal is lower than a threshold, it is detected whether the holding posture is correct; if the holding posture is correct, it indicates that the change of signal is not caused by the holding posture and be possibly caused by the deterioration of signal of the cell base station, the deterioration of the use environment and the like. If it is detected that the holding posture is changed before or while the signal of the mobile terminal is changed, it may be caused by switching the holding posture of the mobile terminal.

If the signal is still not improved after the signal is deteriorated and the holding posture is adjusted to be reasonable or correct, the mobile terminal will not give a prompt again.

Meanwhile, if the mobile terminal has an antenna switching circuit or chip, it can also be judged, by switching antenna, whether the signal is correlated to the holding posture. If the wireless performance is quite different after the antenna is switched and the difference of the gain of the antenna itself is subtracted, it indicates that it is correlated to the holding posture. If the wireless performance is still low after the antenna is switched, it indicates that the current signal deterioration is not caused by the incorrect holding posture.

The wireless signal model storage module L4 is connected to the wireless performance comparison and judgment module L3 and the wireless signal detection unit L1 to store acquired wireless signal values in various holding postures. This module will first store antenna OTA values of the mobile terminal in a free space under each frequency band, and then store OTA values when there is a hand holding. It is to be noted that hand model values are model values in different postures and touch points instead of conventional single-hand test models. For example, it covers a left hand model and a right hand model, and each of the left and right hands can be classified into three touch point combinations A, B and C. If the landscape screen display holding mode is adopted, there may also be three touch point combinations D, E and F. These modes are self-tested and stored into the model storage module of the mobile terminal before leaving the factory, and then called by different detected holding postures. If a new posture is commonly used by the user, the new posture can also be established as a new parameter model for reference and calling.

The tactile feedback control module L5 is connected to the wireless performance comparison and judgment module L3, the feedback vibration array 6 and the feedback display unit L7 (the tactile feedback control module L5, the feedback vibration array 6 and the feedback display unit L7 correspond to the prompt module 86 described above) to feed back and control different holding postures o the terminal system. When it is detected that the current holding posture performance is not optimal or there is a serious signal quality problem, the tactile feedback control module L5 will control the mobile terminal to perform tactile feedback adjustment.

The feedback control mechanism may include one or more of the following: display feedback, vibration feedback or voice prompt feedback. Other feedback modes are also possible. The feedback control mechanism may be set by default or set by users, or may be one or a combination of multiple feedback mechanisms.

Generally, if it is detected that the user is in a state where it is convenient to view the screen interface of the mobile terminal, for example, in a non-call state, for example a game state or an online state, the display feedback mode may be adopted, and the feedback display unit displays at the corresponding position on a side of the LCD, so that the holding posture and the signal state are intuitively displayed to the user.

If it is detected that the terminal in a call state or in a mode where the user does not directly watch the LCD of the mobile terminal, the vibration feedback or voice feedback prompt mode may be adopted. A prompt that the current position cannot be touched is given to the user, and a better holding point or holding posture is prompted.

The feedback vibration array L6 is connected to the tactile feedback control module L5 to give tactile feedback prompts and guidance in different holding postures. This array is achieved by combining a plurality of vibration devices built in the mobile terminal. The vibration devices may be cylindrical motors, circular linear motors or pressure-sensitive motors. As shown in FIG. 18, a certain star-shaped distribution region is formed by a vibration combination of multiple motors. If a certain region on the edge of the mobile terminal is held, certain tactile feedback will be formed. The user can set vibration or non-vibration for a correct holding point, and the amplitude and frequency of vibration are adjustable. If vibration is set for a wrong holding point, the worse the signal is, the stronger the vibration is. However, no vibration occurs in the case of a correct holding point. The vibration frequency and strength are correlated according to the signal strength. The worse the signal is, the more obvious the vibration is. The user can easily switch the holding mode by using this feedback system.

The vibration motor combination is built in the mobile terminal, and may be composed of at least two or more vibration motors. Modules of the motor combination are arranged at several corners of the mobile terminal. When a motor operates, the eccentric wheel on the rotation shaft of the motor will rotate together with the motor. Since the center mass point of the eccentric wheel is not located on the rotation center of the motor, the motor will be continuously out of balance and vibrate. For a slight imbalance, it can be changed by vibration of one or more motors, thereby forming moments of force at various angles.

By regional vibration feedback in a particular direction, the vibration module can also vibrate at different frequencies, amplitudes and periodicities according to the current antenna performance, so as to guide the user's hand holding operation.

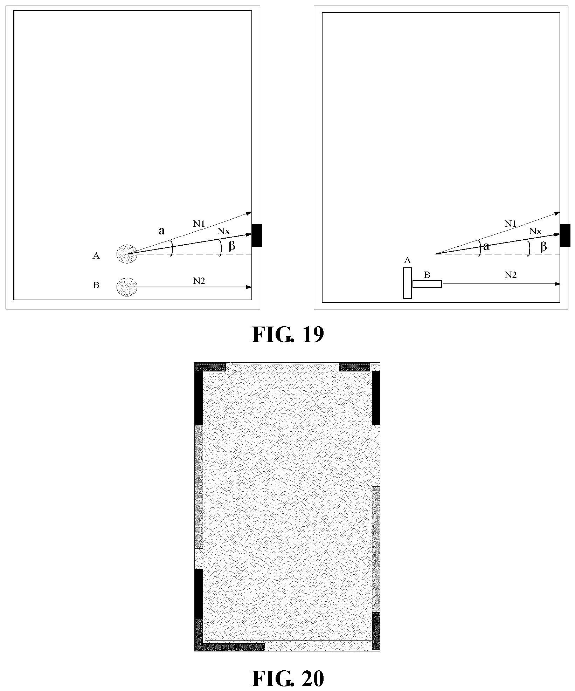

This device is improved based on the vibration motors inside the mobile terminal, and at least two vibration motors are required. The type of the motors may be cylindrical motors, linear motors, ceramic piezoelectric motors or other types of motors. For conventional single motors, due to the limitation of the internal eccentric device structure, the vibration direction is generally unidirectional. Here, the movement direction of the eccentric device is controlled to be variable by improvements. As shown in FIG. 19, two motors A and B are arranged on the mobile terminal, the motor A is controlled to have a rotation speed of V1 and an eccentric distance of S1, and the motor B is controlled to have a rotation speed of V2 and an eccentric distance of S2. It is set that the motors can rotate forward or backward, so the values of V1 and V2 may be positive values or negative values. Meanwhile, here, the vibrators of the motors are designed to be movable up and down, so the eccentric distances S1 and S2 may also be positive values or negative values. The two motors are arranged at spare positions on the PCB. The two motors are controlled separately by different control signals such as ENABLE or VOLTAGE, so that the direction of the output torque of the motor A is N1, the direction of the output torque of the motor B is N2, and the included angle is α. By a trigonometric formula, the resultant torque value of the two motors is Nx, and the resultant vibration direction is β. The angular direction β is defined as a direction in which the finger touches the frame of the mobile terminal. For example, the directions of the fingers A, B and C are defined as β1, β2 and β3, respectively.

The feedback display unit L7 is connected to the tactile feedback control module L5 to give visual feedback prompts and guidance in different holding postures. As shown in FIG. 20, after the detection module is started, this unit correspondingly displays, on the edge of the LCD, regions corresponding to the frame surrounding the mobile terminal in form of square bars or lines.

In a mobile terminal with a metal frame or made of a metal material, since the middle metal frame is a part of the antenna or the functions of the whole antenna are all achieved by some nodes of the middle metal frame, since a certain antenna parasitic effect will be formed when the user's finger or palm touches a corresponding position of the frame of the mobile terminal in the process of using the mobile terminal, the human body is also a part of the antenna. When a hand touches different positions of the mobile terminal, the antenna effects will be different. The antenna efficiency is enhanced sometimes, weakened sometimes or not affected sometimes.

If a certain region on the edge of the mobile terminal is held by a finger or palm, the holding posture detection unit L2 will detect this signal. The feedback display unit L7 is associated according to the signal strength. The touch points with different strengths will be displayed in different colors (different gray levels represent different colors in FIG. 20). Here, fixed colors may be used. The user can set that the correct holding point is displayed in red or green. For example, the red color represents a touch point with poor signal, the black color represents a touch point that is not affected, and the green color represents a touch point with enhanced signal. Other gradient colors may also be used. For example, the comprehensive influencing factor of the current touch point touched by the human body is represented by the gradation of a certain color.

If the current wireless signal of the mobile terminal is poor and it is detected that the current holding posture is not matched with the current wireless mode of the mobile terminal, the feedback display unit will display the current color state of the touch point and prompt an optimal touch point position. After the user see this prompt, the holding posture or the touch point of the finger can be changed, so that the current wireless signal quality can be improved.

In addition, the feedback prompt unit L7 may further include voice prompt feedback. The user can adopt default settings or interesting custom settings. For example, a prompt "Master, please rotate me by 90 degrees for use", "Master, your little finger pinches me", "Master, move your fingers up a little, and the signal may be better" will be given to the user. After the user hears the prompt voice, the user can know whether the current holding posture or holding point is correct.

In the feedback adjustment mechanism mentioned above, if the signal is still not improved after the user is instructed to perform multiple adjustments, it indicates that the holding posture is not the main reason for the deterioration of the current signal strength. Thus, the terminal will not continuously give a feedback prompt in order to avoid affecting the user to use normal functions. One or more prompts, prompt time interval, close prompt and the like may be set in the feedback control interface. The user can customize the settings.

The antenna unit L8 is connected to the wireless signal detection unit L1 and the holding posture detection unit L2 to receive and transmit wireless signals, and induce human antenna effects. In this device, the antenna unit L8 is connected to the RF front-end module of the mobile terminal to receive and transmit wireless signals.

The baseband chip module L9 is connected to the wireless signal detection unit L1 to acquire the current signal strength and the display mode. The baseband chip module L9 is connected to the RF chip module in the mobile terminal, so that the current wireless signal strength of each module can be detected in real time and then fed back to the wireless signal detection unit L1. Meanwhile, the baseband chip module L9 is also connected to each sensor module and the display interface module to detect the current acceleration state and the landscape/portrait display state.

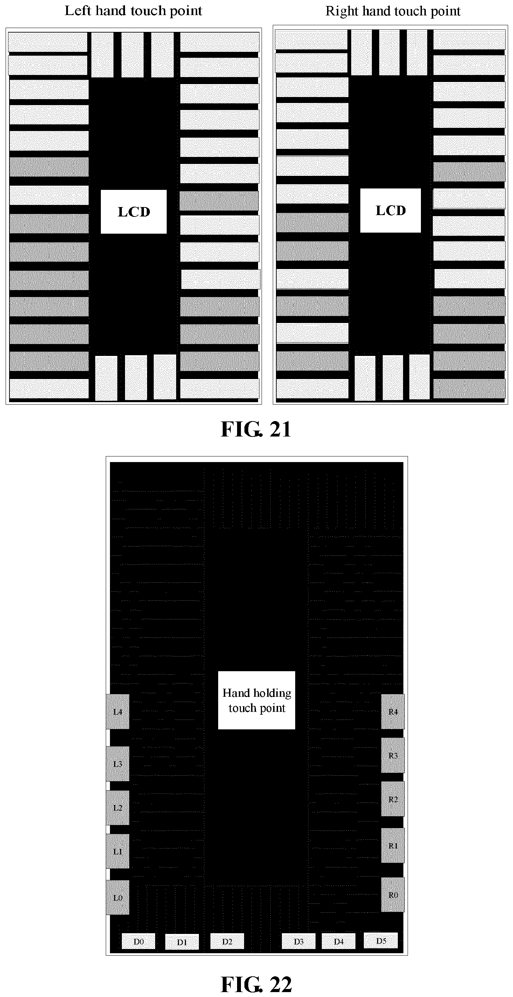

The holding point calibration unit L10 is connected to the wireless signal detection unit L1 and the wireless signal model storage model L4 to calibrate human antenna effect compensations for each frequency point and each holding point before leaving the factory. As shown in FIG. 21, each human touch point on the mobile terminal is divided into several blocks, each of which is equivalent to a parasitic antenna section. If the user's finger or palm comes into contact with the corresponding frame region, a corresponding equivalent parasitic value will be formed, for example, a change value of the standing wave, a frequency offset value and the like. The values corresponding to these blocks will be subjected to comprehensive contact calibration before leaving the factory, and the corresponding values are generated and stored in the wireless signal storage model for subsequent calling by users.

Meanwhile, since each user's fingers are different in size, dielectric constant and the like, the user can perform a secondary self-calibration to correct the stored default values, thereby improving the accuracy of the human antenna.

In addition to holding the model by hand, the technical schemes in the embodiments of the present invention can also be extended to the detection of touch points touched by the left or right side of a head.

FIG. 22 is a schematic diagram of several divided touch points at a lower part of the mobile terminal according to an embodiment of the present invention, for example, five holding points L0 to L4 on the left side, six holding points D0 to D5 on the bottom and five holding points R0 to R4 on the right side.

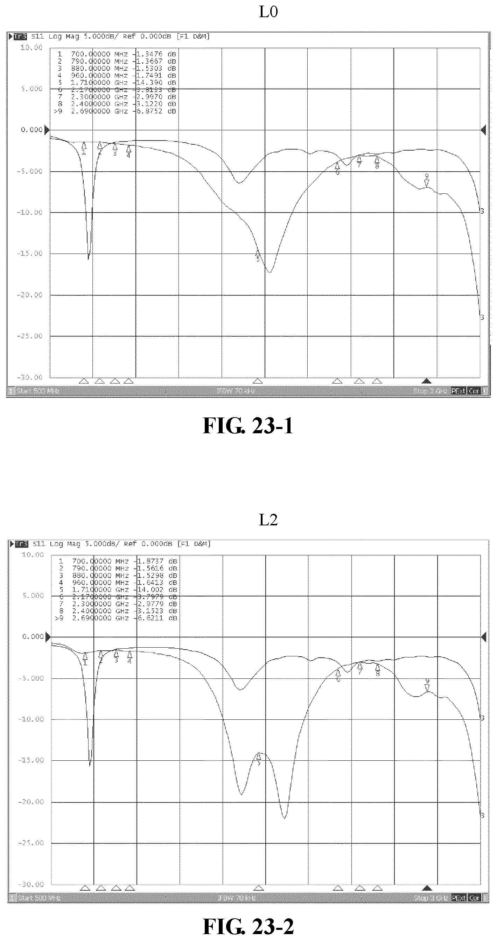

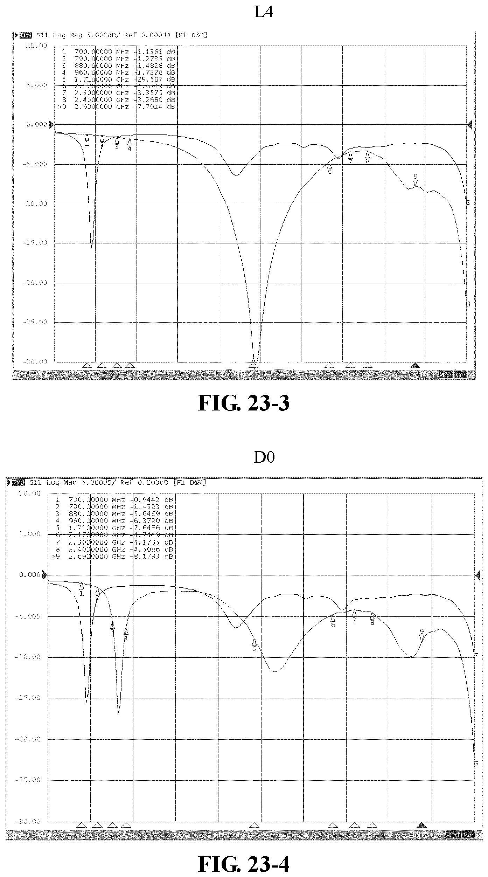

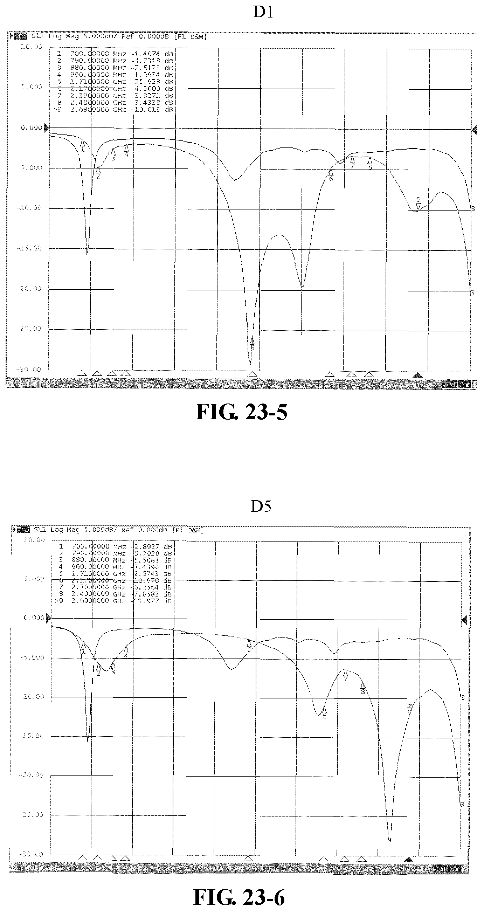

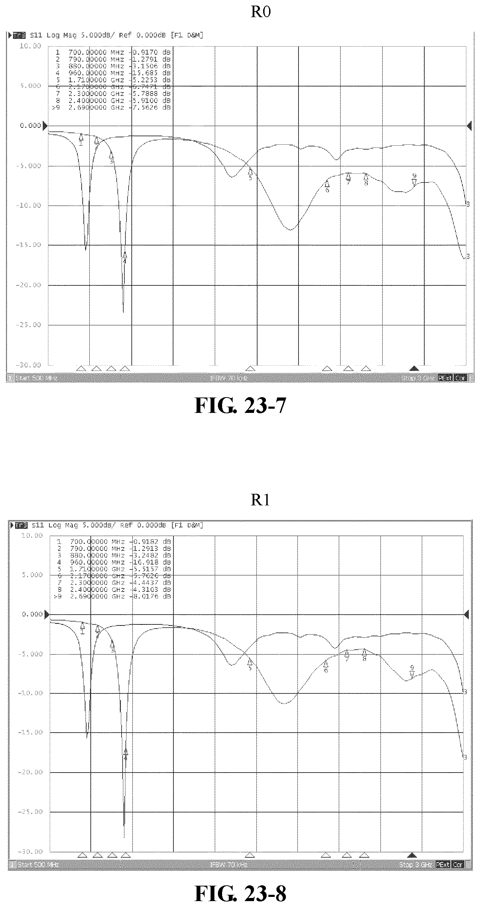

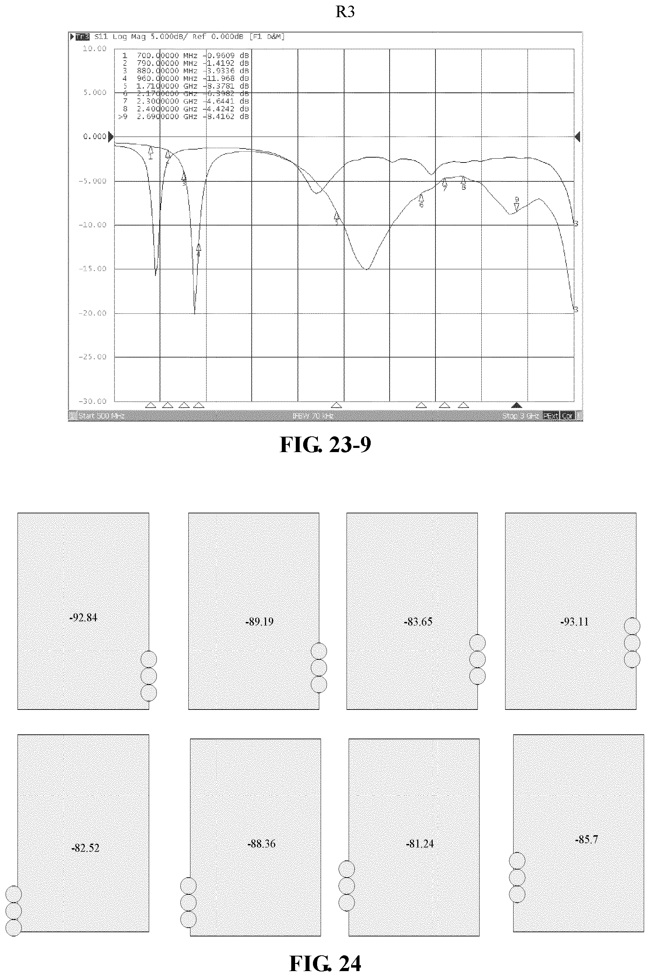

FIGS. 23-1 to 23-9 are return loss measured values of frequency bands of the antenna of the mobile terminal at some holding points, a deeper depression indicates that this frequency point has higher antenna efficiency.

FIG. 24 is a schematic diagram of RSSI measured values in some holding postures and holding points, and the circles in FIG. 24 are holding points of fingers of a hand.

In the present invention, by improving the circuit built in the mobile terminal, the problem of the deterioration of the antenna performance in the handheld state and different holding posture states can be solved. Meanwhile, the call completion rate, call drop rate and data service of the mobile terminal when held by hand can be improved by using the human antenna effect.

This technical scheme is not only applicable to 2G/3G/4G/5G terminals, but also can improve antennas without antenna switching and tuning circuits, such as WIFI/BT/GPS, so as to improve the data service and the satellite searching and positioning performance.

This technical scheme can also improve the deterioration and degradation of TRP and TIS of left and right hands which cannot be saved by switching upper and lower antennas.

This technical scheme can adjust the antenna performance or change holding points according to different hand habits, for example, left and right hands, big hands or small hands, different holing points and the like, thereby achieving the purpose of improving the antenna performance in a targeted manner.

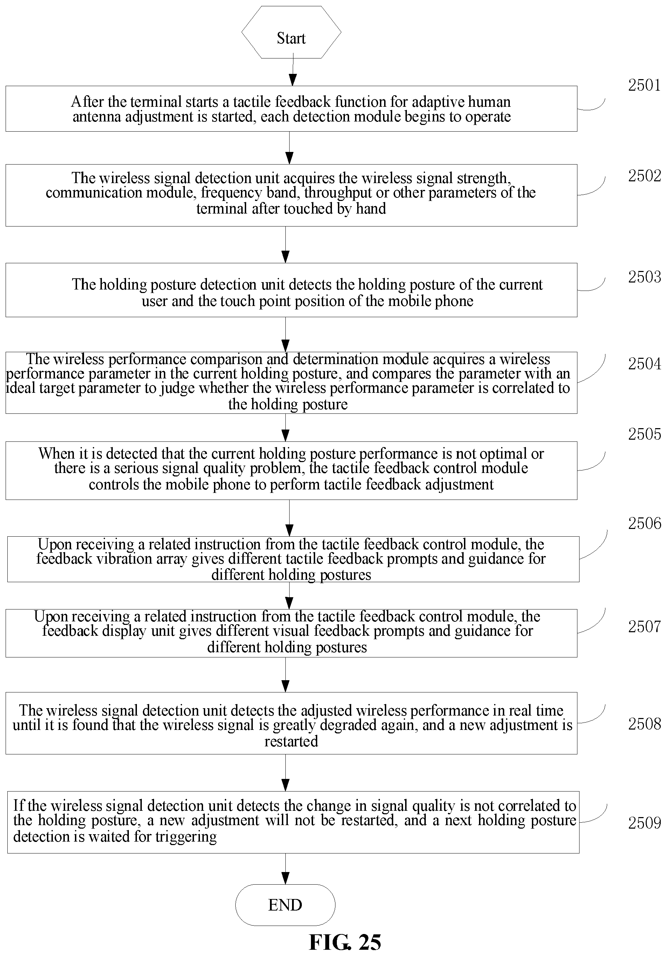

FIG. 25 is an operating flow diagram of a feedback adjustment device of a mobile terminal according to an embodiment of the present invention. The method for the mobile terminal of the present invention includes the following steps.

In a step of 2501, after a tactile feedback function for adaptive human antenna adjustment is started, the holding posture calibration module L10 detects and calibrates holding points of the terminal.

In a step of 2502, the wireless signal strength, communication module, frequency band, throughput or other parameters of the terminal after touched by hand are acquired.

In a step of 2503, the holding posture detection unit L2 detects the holding posture of the current user and the touch point position of the mobile terminal.

In a step of 2504, the wireless performance comparison and judgment module L3 acquires a wireless performance parameter in the current holding posture, and compares the parameter with an ideal target parameter to judge whether the wireless performance parameter is correlated to the holding posture.

In a step of 2505, when it is detected that the current holding posture performance is not optimal or there is a serious signal quality problem, the tactile feedback control module L5 controls the mobile terminal to perform tactile feedback adjustment.

In a step of 2506, upon receiving a related instruction from the tactile feedback control module L5, the feedback vibration array L6 gives different tactile feedback prompts and guidance for different holding postures.

In a step of 2507, upon receiving a related instruction from the tactile feedback control module L5, the feedback display unit L7 gives different visual feedback prompts and guidance for different holding postures.

In a step of 2508, the wireless signal detection unit L1 detects the adjusted wireless performance in real time until it is found that the wireless signal is greatly degraded again, and a new adjustment is restarted.

In a step of 2509, if the wireless signal detection unit L1 detects the change in signal quality is not correlated to the holding posture, a new adjustment will not be restarted, and a next holding posture detection is waited for triggering.

It is to be noted that the above modules may be achieved by software or hardware. In the latter case, the modules may be achieved in the following way, but it is not limited thereto: the modules are located in a same processor; or, the modules are located in different processors in any combination.

An embodiment of the present invention further provides a storage medium storing computer programs which, when executed, perform the steps in any one of the method embodiments described above.

Optionally, in this embodiment, the storage medium may include, but not limited to: U disks, ROMs (read-only memories), RAMs (random access memories), mobile hard disks, magnetic disks, optical disks, or various mediums that can store program codes.

An embodiment of the present invention further provides an electronic apparatus including a memory and a processor. The memory stores computer programs which, when executed by the processor, cause the processor to perform the steps in any one of the method embodiments described above.

Optionally, the electronic apparatus may further include a transmission device and an input/output device, the transmission device is connected to the processor, and the input/output device is connected to the processor.

Optionally, the specific examples in this embodiment may refer to the examples described in the above embodiments and optional implementations, which will not be repeated in this embodiment
According to the embodiments of the present invention, not only the hand mode can be detected, but also the specific handheld part and the antenna touch point of the terminal can be detected. The above-mentioned methods to optimize the wireless performance of the mobile terminal in the existing technology are to adjust antenna matching and switch antennas, but the human body is not used as a part of the antenna. However, the human body can deteriorate or enhance the antenna. Usually, by tuning or switching antennas, the handheld OTD performance of the antenna cannot be optimal. In the embodiments of the present invention, instead of tuning or switching antennas, the specific holding position and holding mode of the user are changed by complementary feedback using a tactile, visual or voice prompt and in combination with a human antenna detection and comparison module, so that the wireless performance is directly improved.

According to several embodiments of the present invention, the target touch position of the touch object can be determined according to the touch action of the touch object so that a prompt is given to adjust the touch position of the touch object on the terminal, that is, an optimal touch position corresponding to the touch object can be determined so that a prompt can be given to an operator, who operates the touch object, to move the touch object to the optimal touch position. Thus, the wireless performance of the terminal is effectively improved. Moreover, the problem in the related technology that the wireless performance of the terminal will be degraded when the touch object touches the terminal is effectively solved, thus effectively improving the wireless performance of the terminal.

Apparently, those having ordinary skill in the art should understand that the above-mentioned modules or steps of the present invention can be performed by a general computing device, they can be concentrated on a single computing device, or distributed on a network composed of multiple computing devices, alternatively, they can be performed with program codes executable by the computing device, so that they can be stored in the storage device and executed by the computing device, and in some cases, the steps shown or described can be performed in a different order than here, or they can be separately fabricated into individual integrated circuit modules, or multiple modules or steps of them can be fabricated into a single integrated circuit module for implementation. In this way, the present invention is not limited to any specific combination of hardware and software.

The foregoing descriptions are only preferred embodiments of the present invention and are not used to limit the present invention. For those having ordinary skill in the art, the present invention can have various modifications and changes. Any modifications, substitutions, improvements, etc. made within the principles of the present invention should be included in the protection scope of the present invention.

## Claims

1. A touch position adjustment method, comprising:
determining (S702) a current wireless performance parameter of a terminal device in response to detecting that there is currently a touch action of a touch object touching the terminal device;
**characterized in that**, the method further comprises the steps:
determining (S704) a target touch position of the touch object touching the terminal device in response to determining that the current wireless performance parameter differs from a predetermined target wireless performance parameter of the terminal device by a first predetermined threshold; and
giving (S706), according to the target touch position, a prompt to adjust a current touch position of the touch object on the terminal device;
before determining (S704) a target touch position of the touch object touching the terminal device, further comprising:
determining a correlation between a deterioration of the wireless performance parameter of the terminal device and the touch action; and
triggering a process of determining the target touch position in response to determining that the deterioration of the wireless performance parameter of the terminal device is correlated to the touch action;
wherein determining a correlation between the deterioration of the wireless performance parameter of the terminal device and the touch action comprises at least one of the following:
judging whether the current touch position of the touch object on the terminal device is an optimal touch position, determining that the deterioration of the wireless performance parameter of the terminal device is not correlated to the touch action in response to the current touch position being the optimal touch position, and determining that the deterioration of the wireless performance parameter of the terminal device is correlated to the touch action in response to the current touch position being not the optimal touch position; or
in response to the terminal device having a switchable target antenna, switching the antenna of the terminal device from the current antenna to the target antenna, determining a wireless performance parameter after antenna switching, removing, from the wireless performance parameter after switching, a gain difference between the target antenna and the current antenna to obtain an adjusted wireless performance parameter after switching, determining a difference between the adjusted wireless performance parameter after switching and the target wireless performance parameter, determining that the deterioration of the wireless performance parameter of the terminal device is not correlated to the touch action in response to the determined difference not exceeding a second predetermined threshold, and determining that the deterioration of the wireless performance parameter of the terminal device is correlated to the touch action in response to the difference exceeding the second predetermined threshold.

2. The method of claim 1, wherein,
after detecting that there is currently a touch action of a touch object touching the terminal device, the method further comprises: determining the current touch position; and, recording a correspondence between the current touch position and the wireless performance parameter into a wireless signal model storage module after determining the current wireless performance parameter, the wireless signal model storage module being configured for recording the correspondence between the touch position and the wireless performance parameter; and
wherein determining (S704) a target touch position of the touch object touching the terminal device comprises: determining a target correspondence from the wireless signal model storage module according to the current wireless performance parameter, and determining a touch position corresponding to the target correspondence as the target touch position.

3. The method of claim 2, wherein determining (S702) a current wireless performance parameter of a terminal device comprises:
determining a current activation module in the terminal device configured for currently activating a wireless signal;
determining a current operating frequency band of the activation module;
determining a current signal strength of the activation module under the current operating frequency band; and
generating the current wireless performance parameter based on the current activation module, the current operating frequency band and the current signal strength.

4. The method of claim 3, wherein determining a target correspondence from the wireless signal model storage module according to the current wireless performance parameter comprises:
determining the current activation module and the current operating frequency band corresponding to the wireless performance parameter;
determining, from the wireless signal model storage module, a wireless performance parameter corresponding to the current activation module and the current operating frequency band, and using the wireless performance parameter as an auxiliary wireless performance parameter;
determining a signal strength corresponding to the auxiliary wireless performance parameter, and using a determined auxiliary wireless performance parameter having the maximum signal strength as a target performance parameter; and
determining a correspondence corresponding to the target performance parameter as the target correspondence.

5. The method of claim 2, further comprising:
recording, into the wireless signal model storage model, a wireless performance parameter of each activation module configured for activating the wireless signal in the terminal device under a free space corresponding to each frequency band, wherein the free space is configured to indicate that the terminal device is not touched by any touch object; and, using the wireless performance parameter of each activation module under the free space corresponding to each frequency band as a target wireless performance parameter of each activation module under each frequency band.

6. The method of claim 1, after determining (S702) a current wireless performance parameter of a terminal device, further comprising:
determining a change value of a parameter of a radio frequency front-end circuit comprised in the terminal device before and after the touch action occurs, the parameter comprising amplitude, phase and standing wave; and
adjusting the current wireless performance parameter based on the change value of the parameter, and using the adjusted wireless performance parameter as the updated current wireless performance parameter.

7. The method of claim 1, wherein,
before giving (S706), according to the target touch position, a prompt to adjust a current touch position of the touch object on the terminal device, the method further comprises: determining a current placement state and the current touch position of the terminal device; and
wherein giving (S706), according to the target touch position, a prompt to adjust a current touch position of the touch object on the terminal device comprises: determining, according to the current placement state, an orientation of the target touch position relative to the current touch position, and giving a prompt to adjust the current touch potion of the touch object on the terminal device to the orientation.

8. The method of claim 7, wherein the determining the current touch position comprises:
determining the current touch position on an edge side of the terminal device by using a plurality of sensors built in the edge side of the terminal device, the plurality of sensors being built in the edge side of the terminal device in a predetermined arrangement order and at a predetermined arrangement interval, the plurality of sensors comprising at least one of the following: a pressure sensor, a photosensitive sensor, a proximity sensor, a temperature sensor or a specific absorption rate, SAR, sensor.

9. The method of claim 1, wherein giving (S706), according to the target touch position, a prompt to adjust a current touch position of the touch object on the terminal device comprises:
giving, according to the target touch position and in a preset default prompt mode, a prompt to adjust the current touch position of the touch object on the terminal device; or
determining an application currently running in the terminal device, determining a preset prompt mode corresponding to the application, and giving, according to the target touch position and in the corresponding prompt mode, a prompt to adjust the current touch position of the touch object on the terminal device.

10. The method of claim 1, wherein giving, according to the target touch position, a prompt to adjust a current touch position of the touch object on the terminal device comprises one of the following steps:
giving, according to the target touch position and in a vibration prompt mode, a prompt to adjust the current touch position of the touch object on the terminal device;
giving, according to the target touch position and in a display prompt mode, a prompt to adjust the current touch position of the touch object on the terminal device; or
giving, according to the target touch position and in a voice prompt mode, a prompt to adjust the current touch position of the touch object on the terminal device.

11. The method of claim 10, wherein, in response to the prompt being given in the vibration prompt mode, a vibration amplitude and/or a vibration frequency is decreased in response to detecting that the touch object moves close to the target touch position from the current touch position, and the vibration amplitude and/or the vibration frequency is increased in response to detecting that the touch object moves away from the target touch position from the current touch position.

12. A storage medium storing instructions which, when executed by a processor, cause the processor to perform the method of any one of claims 1 to 11.

13. An electronic apparatus, comprising a memory and a processor, wherein the memory stores computer programs which, when executed by the processor, cause the processor to perform the method of any one of claims 1 to 11.

## Patentansprüche

1. Verfahren zur Anpassung einer Berührungsposition, umfassend:
Bestimmen (S702) eines derzeitigen Drahtlosleistungsparameters einer Endgerätvorrichtung als Reaktion darauf, dass detektiert wird, dass derzeit eine Berührungsaktion eines Berührungsobjekts vorliegt, das die Endgerätvorrichtung berührt;
**dadurch gekennzeichnet, dass** das Verfahren ferner die folgenden Schritte umfasst:
Bestimmen (S704) einer Zielberührungsposition des Berührungsobjekts, das die Endgerätvorrichtung berührt, als Reaktion darauf, dass bestimmt wird, dass sich der derzeitige Drahtlosleistungsparameter um einen ersten vorbestimmten Schwellenwert von einem vorbestimmten Zieldrahtlosleistungsparameter der Endgerätvorrichtung unterscheidet; und
Geben (S706) einer Aufforderung zum Anpassen einer derzeitigen Berührungsposition des Berührungsobjekts auf der Endgerätvorrichtung gemäß der Zielberührungsposition;
vor dem Bestimmen (S704) einer Zielberührungsposition des Berührungsobjekts, das die Endgerätvorrichtung berührt, ferner umfassend:
Bestimmen einer Korrelation zwischen einer Verschlechterung des Drahtlosleistungsparameters der Endgerätvorrichtung und der Berührungsaktion; und
Auslösen eines Vorgangs zum Bestimmen der Zielberührungsposition als Reaktion darauf, dass bestimmt wird, dass die Verschlechterung des Drahtlosleistungsparameters der Endgerätvorrichtung mit der Berührungsaktion korreliert ist;
wobei das Bestimmen einer Korrelation zwischen der Verschlechterung des Drahtlosleistungsparameters der Endgerätvorrichtung und der Berührungsaktion mindestens eines der Folgenden umfasst:
Beurteilen, ob die derzeitige Berührungsposition des Berührungsobjekts auf der Endgerätvorrichtung eine optimale Berührungsposition ist, Bestimmen, dass die Verschlechterung des Drahtlosleistungsparameters der Endgerätvorrichtung nicht mit der Berührungsaktion korreliert ist, als Reaktion darauf, dass die derzeitige Berührungsposition die optimale Berührungsposition ist, und Bestimmen, dass die Verschlechterung des Drahtlosleistungsparameters der Endgerätvorrichtung mit der Berührungsaktion korreliert ist, als Reaktion darauf, dass die derzeitige Berührungsposition nicht die optimale Berührungsposition ist; oder
als Reaktion darauf, dass die Endgerätvorrichtung eine umschaltbare Zielantenne aufweist, Umschalten der Antenne der Endgerätvorrichtung von der derzeitigen Antenne auf die Zielantenne, Bestimmen eines Drahtlosleistungsparameters nach dem Antennenumschalten, Entfernen einer Verstärkungsdifferenz zwischen der Zielantenne und der derzeitigen Antenne von dem Drahtlosleistungsparameter nach dem Umschalten, um einen angepassten Drahtlosleistungsparameter nach dem Umschalten zu erlangen, Bestimmen einer Differenz zwischen dem angepassten Drahtlosleistungsparameter nach dem Umschalten und dem Zieldrahtlosleistungsparameter, Bestimmen, dass die Verschlechterung des Drahtlosleistungsparameters der Endgerätvorrichtung nicht mit der Berührungsaktion korreliert ist, als Reaktion darauf, dass die bestimmte Differenz einen zweiten vorbestimmten Schwellenwert nicht überschreitet, und Bestimmen, dass die Verschlechterung des Drahtlosleistungsparameters der Endgerätvorrichtung mit der Berührungsaktion korreliert ist, als Reaktion darauf, dass die Differenz den zweiten vorbestimmten Schwellenwert überschreitet.

2. Verfahren nach Anspruch 1, wobei
nach dem Detektieren, dass derzeit eine Berührungsaktion eines Berührungsobjekts vorliegt, das die Endgerätvorrichtung berührt, das Verfahren ferner Folgendes umfasst: Bestimmen der derzeitigen Berührungsposition; und Aufzeichnen einer Entsprechung zwischen der derzeitigen Berührungsposition und dem Drahtlosleistungsparameter in einem Drahtlossignalmodellspeichermodul nach dem Bestimmen des derzeitigen Drahtlosleistungsparameters, wobei das Drahtlossignalmodellspeichermodul zum Aufzeichnen der Entsprechung zwischen der Berührungsposition und dem Drahtlosleistungsparameter konfiguriert ist; und
wobei das Bestimmen (S704) einer Zielberührungsposition des Berührungsobjekts, das die Endgerätvorrichtung berührt, Folgendes umfasst: Bestimmen einer Zielentsprechung aus dem Drahtlossignalmodellspeichermodul gemäß dem derzeitigen Drahtlosleistungsparameter und Bestimmen einer Berührungsposition, die der Zielentsprechung entspricht, als die Zielberührungsposition.

3. Verfahren nach Anspruch 2, wobei das Bestimmen (S702) eines derzeitigen Drahtlosleistungsparameters einer Endgerätvorrichtung Folgendes umfasst:
Bestimmen eines derzeitigen Aktivierungsmoduls in der Endgerätvorrichtung, das zum derzeitigen Aktivieren eines Drahtlossignals konfiguriert ist;
Bestimmen eines derzeitigen Betriebsfrequenzbands des Aktivierungsmoduls;
Bestimmen einer derzeitigen Signalstärke des Aktivierungsmoduls unter dem derzeitigen Betriebsfrequenzband; und
Generieren des derzeitigen Drahtlosleistungsparameters basierend auf dem derzeitigen Aktivierungsmodul, dem derzeitigen Betriebsfrequenzband und der derzeitigen Signalstärke.

4. Verfahren nach Anspruch 3, wobei das Bestimmen einer Zielentsprechung aus dem Drahtlossignalmodellspeichermodul gemäß dem derzeitigen Drahtlosleistungsparameter Folgendes umfasst:
Bestimmen des derzeitigen Aktivierungsmoduls und des derzeitigen Betriebsfrequenzbands, die dem Drahtlosleistungsparameter entsprechen;
Bestimmen eines Drahtlosleistungsparameters, der dem derzeitigen Aktivierungsmodul und dem derzeitigen Betriebsfrequenzband entspricht, aus dem Drahtlossignalmodellspeichermodul und Verwenden des Drahtlosleistungsparameters als Hilfsdrahtlosleistungsparameter;
Bestimmen einer Signalstärke, die dem Hilfsdrahtlosleistungsparameter entspricht, und Verwenden eines bestimmten Hilfsdrahtlosleistungsparameters, der die maximale Signalstärke aufweist, als den Zielleistungsparameter; und
Bestimmen einer Entsprechung, die dem Zielleistungsparameter entspricht, als die Zielentsprechung.

5. Verfahren nach Anspruch 2, ferner umfassend:
Aufzeichnen eines Drahtlosleistungsparameters jedes Aktivierungsmoduls, das zum Aktivieren des Drahtlossignals in der Endgerätvorrichtung unter einem freien Raum konfiguriert ist, der jedem Frequenzband entspricht, in dem Drahtlossignalmodellspeichermodul, wobei der freie Raum dazu konfiguriert ist, anzugeben, dass die Endgerätvorrichtung durch kein Berührungsobjekt berührt wird; und Verwenden des Drahtlosleistungsparameters jedes Aktivierungsmoduls unter dem freien Raum, der jedem Frequenzband entspricht, als Zieldrahtlosleistungsparameter jedes Aktivierungsmoduls unter jedem Frequenzband.

6. Verfahren nach Anspruch 1, nach dem Bestimmen (S702) eines derzeitigen Drahtlosleistungsparameters einer Endgerätvorrichtung ferner umfassend:
Bestimmen eines Änderungswerts eines Parameters einer Hochfrequenz-Frontend-Schaltung, die in der Endgerätvorrichtung umfasst ist, bevor und nachdem die Berührungsaktion erfolgt, wobei der Parameter Amplitude, Phase und stehende Welle umfasst; und
Anpassen des derzeitigen Drahtlosleistungsparameters basierend auf dem Änderungswert des Parameters und Verwenden des angepassten Drahtlosleistungsparameters als den aktualisierten derzeitigen Drahtlosleistungsparameter.

7. Verfahren nach Anspruch 1, wobei
vor dem Geben (S706) einer Aufforderung zum Anpassen einer derzeitigen Berührungsposition des Berührungsobjekts auf der Endgerätvorrichtung gemäß der Zielberührungsposition das Verfahren ferner Folgendes umfasst: Bestimmen eines derzeitigen Platzierungszustands und der derzeitigen Berührungsposition der Endgerätvorrichtung; und
wobei das Geben (S706) einer Aufforderung zum Anpassen einer derzeitigen Berührungsposition des Berührungsobjekts auf der Endgerätvorrichtung gemäß der Zielberührungsposition Folgendes umfasst: Bestimmen einer Ausrichtung der Zielberührungsposition relativ zu der derzeitigen Berührungsposition gemäß dem derzeitigen Platzierungszustand und Geben einer Aufforderung zum Anpassen des derzeitigen Berührungstranks des Berührungsobjekts auf der Endgerätvorrichtung an die Ausrichtung.

8. Verfahren nach Anspruch 7, wobei das Bestimmen der derzeitigen Berührungsposition Folgendes umfasst:
Bestimmen der derzeitigen Berührungsposition auf einer Kantenseite der Endgerätvorrichtung durch Verwendung einer Vielzahl von Sensoren, die in die Kantenseite der Endgerätvorrichtung eingebaut ist, wobei die Vielzahl von Sensoren in einer vorbestimmten Anordnungsreihenfolge und in einem vorbestimmten Anordnungsintervall in die Kantenseite der Endgerätvorrichtung eingebaut ist, wobei die Vielzahl von Sensoren mindestens einen der Folgenden umfasst: einen Drucksensor, einen lichtempfindlichen Sensor, einen Näherungssensor, einen Temperatursensor oder einen Sensor für die spezifische Absorptionsrate, SAR-Sensor.

9. Verfahren nach Anspruch 1, wobei das Geben (S706) einer Aufforderung zum Anpassen einer derzeitigen Berührungsposition des Berührungsobjekts auf der Endgerätvorrichtung gemäß der Zielberührungsposition Folgendes umfasst:
Geben einer Aufforderung zum Anpassen der derzeitigen Berührungsposition des Berührungsobjekts auf der Endgerätvorrichtung gemäß der Zielberührungsposition und in einem voreingestellten Standardaufforderungsmodus; oder
Bestimmen einer derzeit auf der Endgerätvorrichtung laufenden Anwendung, Bestimmen eines voreingestellten Aufforderungsmodus, der der Anwendung entspricht, und Geben einer Aufforderung zum Anpassen der derzeitigen Berührungsposition des Berührungsobjekts auf der Endgerätvorrichtung gemäß der Zielberührungsposition und in dem entsprechenden Aufforderungsmodus.

10. Verfahren nach Anspruch 1, wobei das Geben einer Aufforderung zum Anpassen einer derzeitigen Berührungsposition des Berührungsobjekts auf der Endgerätvorrichtung gemäß der Zielberührungsposition einen der folgenden Schritte umfasst:
Geben einer Aufforderung zum Anpassen der derzeitigen Berührungsposition des Berührungsobjekts auf der Endgerätvorrichtung gemäß der Zielberührungsposition und in einem Vibrationsaufforderungsmodus;
Geben einer Aufforderung zum Anpassen der derzeitigen Berührungsposition des Berührungsobjekts auf der Endgerätvorrichtung gemäß der Zielberührungsposition und in einem Anzeigeaufforderungsmodus; oder
Geben einer Aufforderung zum Anpassen der derzeitigen Berührungsposition des Berührungsobjekts auf der Endgerätvorrichtung gemäß der Zielberührungsposition und in einem Sprachaufforderungsmodus.

11. Verfahren nach Anspruch 10, wobei als Reaktion darauf, dass die Aufforderung in dem Vibrationsaufforderungsmodus gegeben wird, eine Vibrationsamplitude und/oder eine Vibrationsfrequenz als Reaktion darauf verringert wird, dass detektiert wird, dass sich das Berührungsobjekt von der derzeitigen Berührungsposition in die Nähe der Zielberührungsposition bewegt, und die Vibrationsamplitude und/oder die Vibrationsfrequenz als Reaktion darauf erhöht wird, dass detektiert wird, dass sich das Berührungsobjekt von der derzeitigen Berührungsposition weg von der Zielberührungsposition bewegt.

12. Speichermedium, das Anweisungen speichert, die, wenn sie durch einen Prozessor ausgeführt werden, den Prozessor dazu veranlassen, das Verfahren nach einem der Ansprüche 1 bis 11 durchzuführen.

13. Elektronische Einrichtung, umfassend einen Speicher und einen Prozessor, wobei der Speicher Computerprogramme speichert, die, wenn sie durch den Prozessor ausgeführt werden, den Prozessor dazu veranlassen, das Verfahren nach einem der Ansprüche 1 bis 11 durchzuführen.

## Revendications

1. Procédé d'ajustement de position tactile, comprenant :
la détermination (S702) d'un paramètre de performance sans fil actuel d'un dispositif terminal en réponse à la détection qu'il y a actuellement une action tactile d'un objet tactile touchant le dispositif terminal ;
**caractérisé en ce que** le procédé comprend en outre les étapes suivantes :
la détermination (S704) d'une position tactile cible de l'objet tactile touchant le dispositif terminal en réponse à la détermination que le paramètre de performance sans fil actuel diffère d'un paramètre de performance sans fil cible prédéterminé du dispositif terminal par un premier seuil prédéterminé ; et
la fourniture (S706), en fonction de la position tactile cible, d'une invite pour ajuster une position tactile actuelle de l'objet tactile sur le dispositif terminal ;
avant la détermination (S704) d'une position tactile cible de l'objet tactile touchant le dispositif terminal, comprenant en outre :
la détermination d'une corrélation entre une détérioration du paramètre de performance sans fil du dispositif terminal et l'action tactile ; et
le déclenchement d'un processus de détermination de la position tactile cible en réponse à la détermination que la détérioration du paramètre de performance sans fil du dispositif terminal est corrélée à l'action tactile ;
dans lequel la détermination d'une corrélation entre la détérioration du paramètre de performance sans fil du dispositif terminal et l'action tactile comprend au moins l'une des étapes suivantes :
l'évaluation si la position tactile actuelle de l'objet tactile sur le dispositif terminal est une position tactile optimale, la détermination que la détérioration du paramètre de performance sans fil du dispositif terminal n'est pas corrélée à l'action tactile en réponse au fait que la position tactile actuelle est la position tactile optimale, et la détermination que la détérioration du paramètre de performance sans fil du dispositif terminal est corrélée à l'action tactile en réponse au fait que la position tactile actuelle n'est pas la position tactile optimale ; ou
en réponse au fait que le dispositif terminal possède une antenne cible commutable, la commutation de l'antenne du dispositif terminal de l'antenne actuelle à l'antenne cible, la détermination d'un paramètre de performance sans fil après la commutation d'antenne, la suppression, à partir du paramètre de performance sans fil après commutation, d'une différence de gain entre l'antenne cible et l'antenne actuelle pour obtenir un paramètre de performance sans fil ajusté après commutation, la détermination d'une différence entre le paramètre de performance sans fil ajusté après commutation et le paramètre de performance sans fil cible, la détermination que la détérioration du paramètre de performance sans fil du dispositif terminal n'est pas corrélée à l'action tactile en réponse au fait que la différence déterminée ne dépasse pas un second seuil prédéterminé, et la détermination que la détérioration du paramètre de performance sans fil du dispositif terminal est corrélée à l'action tactile en réponse au fait que la différence dépasse le second seuil prédéterminé.

2. Procédé selon la revendication 1, dans lequel,
après avoir détecté qu'il y a actuellement une action tactile d'un objet tactile touchant le dispositif terminal, le procédé comprend en outre : la détermination de la position tactile actuelle ; et l'enregistrement d'une correspondance entre la position tactile actuelle et le paramètre de performance sans fil dans un module de stockage de modèle de signal sans fil après avoir déterminé le paramètre de performance sans fil actuel, le module de stockage de modèle de signal sans fil étant configuré pour enregistrer la correspondance entre la position tactile et le paramètre de performance sans fil ; et
dans lequel la détermination (S704) d'une position tactile cible de l'objet tactile touchant le dispositif terminal comprend : la détermination d'une correspondance cible à partir du module de stockage de modèle de signal sans fil en fonction du paramètre de performance sans fil actuel, et la détermination d'une position tactile correspondant à la correspondance cible comme la position tactile cible.

3. Procédé selon la revendication 2, dans lequel la détermination (S702) d'un paramètre de performance sans fil actuel d'un dispositif terminal comprend :
la détermination d'un module d'activation actuel dans le dispositif terminal configuré pour activer actuellement un signal sans fil ;
la détermination d'une bande de fréquences de fonctionnement actuelle du module d'activation ;
la détermination d'une intensité de signal actuelle du module d'activation sous la bande de fréquences de fonctionnement actuelle ; et
la génération du paramètre de performance sans fil actuel sur la base du module d'activation actuel, de la bande de fréquences de fonctionnement actuelle et de l'intensité de signal actuelle.

4. Procédé selon la revendication 3, dans lequel la détermination d'une correspondance cible à partir du module de stockage de modèle de signal sans fil en fonction du paramètre de performance sans fil actuel comprend :
la détermination du module d'activation actuel et de la bande de fréquences de fonctionnement actuelle correspondant au paramètre de performance sans fil ;
la détermination, à partir du module de stockage de modèle de signal sans fil, d'un paramètre de performance sans fil correspondant au module d'activation actuel et à la bande de fréquences de fonctionnement actuelle, et l'utilisation du paramètre de performance sans fil en tant que paramètre de performance sans fil auxiliaire ;
la détermination d'une intensité de signal correspondant au paramètre de performance sans fil auxiliaire, et l'utilisation d'un paramètre de performance sans fil auxiliaire déterminé ayant l'intensité de signal maximale en tant que paramètre de performance cible ; et
la détermination d'une correspondance correspondant au paramètre de performance cible comme la correspondance cible.

5. Procédé selon la revendication 2, comprenant en outre :
l'enregistrement, dans le modèle de stockage de modèle de signal sans fil, d'un paramètre de performance sans fil de chaque module d'activation configuré pour activer le signal sans fil dans le dispositif terminal sous un espace libre correspondant à chaque bande de fréquence, dans lequel l'espace libre est configuré pour indiquer que le dispositif terminal n'est touché par aucun objet tactile ; et, l'utilisation du paramètre de performance sans fil de chaque module d'activation sous l'espace libre correspondant à chaque bande de fréquences en tant que paramètre de performance sans fil cible de chaque module d'activation sous chaque bande de fréquences.

6. Procédé selon la revendication 1, après la détermination (S702) d'un paramètre de performance sans fil actuel d'un dispositif terminal, comprenant en outre :
la détermination d'une valeur de changement d'un paramètre d'un circuit frontal radiofréquence compris dans le dispositif terminal avant et après la survenue de l'action tactile, le paramètre comprenant l'amplitude, la phase et l'onde stationnaire ; et
l'ajustement du paramètre de performance sans fil actuel sur la base de la valeur de modification du paramètre, et l'utilisation du paramètre de performance sans fil ajusté comme le paramètre de performance sans fil actuel mis à jour.

7. Procédé selon la revendication 1, dans lequel,
avant la fourniture (S706), en fonction de la position tactile cible, d'une invite pour ajuster une position tactile actuelle de l'objet tactile sur le dispositif terminal, le procédé comprend en outre :
la détermination d'un état de placement actuel et de la position tactile actuelle du dispositif terminal ; et
dans lequel la fourniture (S706), en fonction de la position tactile cible, d'une invite pour ajuster une position tactile actuelle de l'objet tactile sur le dispositif terminal comprend : la détermination, en fonction de l'état de placement actuel, d'une orientation de la position tactile cible par rapport à la position tactile actuelle, et la fourniture d'une invite pour ajuster la potion tactile actuelle de l'objet tactile sur le dispositif terminal à l'orientation.

8. Procédé selon la revendication 7, dans lequel la détermination de la position tactile actuelle comprend :
la détermination de la position tactile actuelle sur un côté de bord du dispositif terminal en utilisant une pluralité de capteurs intégrés dans le côté de bord du dispositif terminal, la pluralité de capteurs étant intégrés dans le côté de bord du dispositif terminal dans un ordre d'agencement prédéterminé et à un intervalle d'agencement prédéterminé, la pluralité de capteurs comprenant au moins l'un des éléments suivants : un capteur de pression, un capteur photosensible, un capteur de proximité, un capteur de température ou un capteur de débit d'absorption spécifique, SAR.

9. Procédé selon la revendication 1, dans lequel la fourniture (S706), en fonction de la position tactile cible, d'une invite pour ajuster une position tactile actuelle de l'objet tactile sur le dispositif terminal comprend :
la fourniture, en fonction de la position tactile cible et dans un mode d'invite par défaut prédéfini, d'une invite pour ajuster la position tactile actuelle de l'objet tactile sur le dispositif terminal ; ou
la détermination d'une application en cours d'exécution dans le dispositif terminal, la détermination d'un mode d'invite prédéfini correspondant à l'application, et la fourniture, en fonction de la position tactile cible et dans le mode d'invite correspondant, d'une invite pour ajuster la position tactile actuelle de l'objet tactile sur le dispositif terminal.

10. Procédé selon la revendication 1, dans lequel la fourniture, en fonction de la position tactile cible, d'une invite pour ajuster une position tactile actuelle de l'objet tactile sur le dispositif terminal comprend l'une des étapes suivantes :
la fourniture, en fonction de la position tactile cible et dans un mode d'invite par vibration, d'une invite pour ajuster la position tactile actuelle de l'objet tactile sur le dispositif terminal ;
la fourniture, en fonction de la position tactile cible et dans un mode d'invite par affichage, d'une invite pour ajuster la position tactile actuelle de l'objet tactile sur le dispositif terminal ; ou
la fourniture, en fonction de la position tactile cible et dans un mode d'invite vocale, d'une invite pour ajuster la position tactile actuelle de l'objet tactile sur le dispositif terminal.

11. Procédé selon la revendication 10, dans lequel, en réponse au fait que l'invite soit fournie dans le mode d'invite par vibration, une amplitude de vibration et/ou une fréquence de vibration sont diminuées en réponse à la détection que l'objet tactile se rapproche de la position tactile cible à partir de la position tactile actuelle, et l'amplitude de vibration et/ou la fréquence de vibration sont augmentées en réponse à la détection que l'objet tactile s'éloigne de la position tactile cible à partir de la position tactile actuelle.

12. Support de stockage stockant des instructions qui, lorsqu'elles sont exécutées par un processeur, amènent le processeur à réaliser le procédé selon l'une quelconque des revendications 1 à 11.

13. Appareil électronique, comprenant une mémoire et un processeur, dans lequel la mémoire stocke des programmes informatiques qui, lorsqu'ils sont exécutés par le processeur, amènent le processeur à exécuter le procédé selon l'une quelconque des revendications 1 à 11.
